# EUROPEAN PATENT SPECIFICATION

(11) **EP 2 078 230 B1**
(45) Date of publication and mention of the grant of the patent: **29.03.2017**
(21) Application number: 07873507.3
(22) Date of filing: 20.07.2007
(51) Int. Cl.: G05B 19/00

(54) **METHOD AND APPARATUS FOR REMOTELY OPERATING APPLIANCES FROM VIDEO INTERPHONES OR SHOPPING TERMINALS**
VERFAHREN UND VORRICHTUNG ZUM REMOTE-BETRIEB VON GERÄTEN ÜBER VIDEO-INTERPHONE ODER EINKAUFSPORTALE
PROCÉDÉ ET APPAREIL POUR ACTIONNER À DISTANCE DES INSTRUMENTS À PARTIR D'INTERPHONES VIDÉO OU DES TERMINAUX DE COURSES

(30) Priority: 24.08.2006 US 509315
(43) Date of publication of application: 15.07.2009
(73) Proprietor: Elbex Video Ltd., Tokyo 141-0031 (JP)
(72) Inventor: ELBERBAUM, David, Tokyo 108-0073 (JP)
(74) Representative: Carpintero Lopez, Francisco
(86) International application number: PCT/US2007/073963
(87) International publication number: WO 2008/118181

(56) References cited:
- EP-A2- 0 926 648
- US-A1- 2005 273 820
- US-A1- 2005 273 820

## Description

### BACKGROUND OF THE INVENTION

### 1. FIELD OF THE INVENTION

This invention is related to video interphone system and to wired or wireless control, including IR and RF, used for remotely operating electrical devices and appliances.

### 2. DESCRIPTION OF THE PRIORT ART

Wired or wireless remote control devices including InfraRed (IR) or RF transmitter for remotely operating electrical appliances such as television receivers, DVD or VCR recorders, audio players, air conditioners, motorized curtains, lighting and other electrical appliances in homes and apartments employ serial or other coding that are configured for operating only with a specific appliance, manufactured by a specific manufacturer. The problem is that each manufacturer of a given appliance uses proprietary technologies for the remote controlling of the appliance with randomly selected frequencies, bandwidth, clocks, signal levels, signal polarities, modulation, protocols and coding techniques, all of which makes the remote control of appliances by different manufacturers incompatible. This prevents the use of a remote control panel for a mixture of appliances and/or systems produced by different manufacturers. The result is that control panels, including panels that employ the well known IR or RF remote control signals for a specific appliance cannot be used with other appliances that are installed in the same house or apartment. This state impedes the advances in home automation, the concept of which is the controlling of different appliances from the same control panel. Current home automation systems therefore mandate the use of interfaces, relay boxes and extensive re-programming of control panels for the integration of different appliances into home automation control system, which is complicated, time consuming and costly. Such a method and apparatus for utilizing unknown remote control signal for integrating remote control keys with video interphone system is also disclosed in U.S. application 11/024,233 dated 12.28.2004.

Other prior publications are EPO 0926 648 that teaches the learning of RF command signals with varying signal levels for operating garage doors and US2005/0273820 teaching an e-shopping terminal including keys for operating appliances.

### SUMMARY OF THE INTENTION

It is an object of the present invention to provide for a method and apparatus for recording the original control codes and signals generated by the remote control devices of the different appliances for integrating the recorded codes and signals into the control panels of video interphones and "shopping terminals." for generating the control codes and signals from the control panels to the different appliances through a driver circuits including at least one driver selected from a group consisting of wireless driver, RF driver, IR driver, bluetooth driver, data driver, hard wired driver, relay driver and a combination thereof for operating electrical appliances including appliances selected from a group consisting of home theater, television receiver, A/V appliances, audio and video players and recorders, BGM (back ground music), radio, clock radio, air conditioners, heaters, lighting devices, light controllers, light switches, electrical shades and curtains, elevator, kitchen appliances, bathroom appliances, garden appliances and a combination thereof. "Shopping terminals" are disclosed in U.S. application 10/864,311 dated 6.8.2004 and PCT international application PCT/US05/19564 dated 6.3.2005 for method and apparatus for simplified e-commerce shopping via home shopping terminals. Video interphones systems are disclosed in U.S. patents 5,923,363, 6,603,842 and 6,940,957.

Another object of the present invention is to provide for a method and apparatus for recording and utilizing unknown coded signals selected from a group consisting of serial coded signal, parallel coded signal, data signals, hard wired contact signals, alarm signals, home sensors signals and a combination thereof for re-generating said coded signal through said driver for operating said electrical appliances.

The apparatus for utilizing unknown remote control signals and other objects of the present invention are attained by using one or more RF receivers for receiving one or more specific or broadband frequencies that are approved by the authorities, such as FCC approval of unlicensed frequencies within the USA. The unlicensed frequencies are the well known frequencies used for remote control devices or alarm devices, identified as specific frequencies of 308.825 MHz, 315 MHz, 418 MHz, 433 MHz, 914 MHz and 916.5 MHz, or as 308-315 MHz band, 415-435 MHz band and 913-918 MHz band.

It is possible to use a single broad band receiver for covering the entire 300 MHz up to 950 MHz range, but in practice it is preferable to use at least two separate receivers for receiving the RF signals generated by any remote control devices, one receiver covers the 300-450 MHz band and the second covers the 900-930 band. Because of the very low RF power transmission permitted by FCC it is preferable to use three receivers, one for the 308-315 MHz band, the second for 415-435 MHz band and the third covering the 913-918 MHz band. If more bands or specific accurate receivers for specific frequencies are needed, any number of matching receivers can be added and used.

It is also possible to provide a sweep frequency receiver covering the entire range of 300 MHz up to 950 MHz, controlled by a CPU by detecting the frequency of a signal generated by RF remote control device, and by locking the oscillator frequency of the receiver to a frequency commensurating with the detected frequency of the received signal. As will be explained later, by such arrangement the CPU can also control the frequency of an RF driver for regenerating RF remote control signals to a selected appliance.

Each of the receivers includes receiving antenna and a demodulator for demodulating the received signals. Each demodulator includes well known circuits that are designed for demodulating on-off keying, known as OOK modulation, amplitude shift keying, known as ASK or AM modulation and frequency shift keying, known as FSK or FM modulation.

The well known demodulator circuits can be demodulators that are incorporated in the well known single package receiver ICs that are commercially available at low cost, or they can be made by standard well known circuit components, such as transistors, diodes, filters, coils and other well known components and designed to accommodate and demodulate an OOK, ASK, AM, FSK or FM modulated signal.

Hence, the first step of the method for utilizing unknown remote control signals is to receive said unknown remote control signals through said at least one receiver and demodulate the received signals on the basis of a modulation selected from a group consisting of OOK, ASK, AM, FSK or FM modulation.

The method and apparatus for utilizing unknown remote control signal of the present inventionapplies to IRremote control signals the same way it applies to the RF remote control signals. For this purpose at least one IR receiver comprising IR filter, lens and photo sensing diode, along with demodulator and processing circuit are incorporated in the apparatus for utilizing unknown remote control signals. The demodulator for demodulating and processing the received IR signals is similar to saidRF demodulator and processor. The commonly used demodulator circuit of such IR receiver is OOK type because the commonly used IR remote control devices are operated on the basis of on-off keying, but any other IR modulation and demodulation circuits can be employed, including AM and FSK modulation.

The wavelength of an IR generated signals for remote control devices ranges from 950nm to 850nm and employ mostly a clock frequency of 38.5KHz with some remote control devices employing clock frequency of up to 500KHz. A single IR receiver covering the wide IR range of 950nm ~ 850nm and beyond can be used for receiving and demodulating the OOK modulated remote control signals. In practice the IR receiver is available in a single low cost package and includes the receiving and demodulating circuits.

The demodulated signal is a low frequency envelope of the original encoded transmission, generated by the remote control panel or device. The envelope signal is outputted from the demodulator through a well known Low Pass Filter, known as LPF, that allows the low frequency of the envelope to pass and blocks the high frequency carrier and/or high frequency noises from the output signals. By this the demodulated output or the envelope signal is reproduced into clean envelope of the original code generated by a given remote control device, such as RF or IR key and which consist mostly of serial digital code, also well known as protocol.

The demodulated envelope signal can be further processed by a well known digital circuits such as digital signal amplifier for amplifying the signals to an over size signal, a well known clipper circuit and a clamping circuit for clipping the signal to its specified level and for clamping the envelope lows or highs to a selected reference, thereby providing clean envelope signal with sharper edges, noise free and with correct levels. Further, the envelope signal canbe reversed by a well-known inverter circuit for unifying the polarities of the envelope signals of the different remote control devices.

The demodulated and processed envelope signal is fed to a gating input of a counter and to an input of a CPU. Many different well known counters and counting methods can be used for utilizing the unknown remote control signals of the present invention, and moreover many of the current well known CPUs, such as the well known microprocessors that are commercially available at low cost, incorporate counting and timing circuits, thereby providing for connecting and feeding the envelope signal directly to the CPU, making the counter as a separate circuit unnecessary and not used, which is the preferred embodiment of this invention. However for clarification the counter is explainedbelowas a separate circuit.

The counter is fed via the CPU with high frequency clock, for example 50 MHz, by this the counting error of a single pulse width and/or the fall or rise time during the counting of the envelope is reduced to units of 0.02µsec or 20nsec duration, which are insignificant time units for the low frequencies of the unknown remote control signals that are ranging from 10Hz and up to 500KHz.

The counter is an up-down counter with a separate preset output and is gated by the envelop signal such that a pulse rise resets the counter to zero and starts the up counting, while a pulse fall also resets the counter to zero but starts the down counting. The counter outputs to the CPU a positive counted number for the duration of the highs of the envelope and a negative counted number for the duration of the lows of the envelope. The CPU that also reads directly the inputted envelope can therefore record the duration of each individual high and low of the envelop signal, the number of highs and lows, the total lows, the total highs, the total length and the total sum pertaining the unknown coded signal as represented by the envelope. Considering the example of the 50MHz clock, the accuracy of the counting will be ±20nsec units of time.

Accordingly, the second step of the method for recording and utilizing unknown coded signals is to feed the envelope of the demodulated signal to a counter of a CPU for counting the content of said unknown envelope, selected from a group consisting of the duration of each high and each low states, the sequence of each high and each low, the total number of highs and lows, the total lows duration and total highs duration, the total sum, the total length (in time) of the envelope and the polarity of the envelope and a combination thereof.

The counted values of said unknown envelope of an unknown remote control signal are recorded by storing the counting details into a memory and utilizing the recording of said unknown coded envelope for accessing and controlling said appliances and/or systems on the basis of the recorded details of said remote control signals. The recording also include such details as listing the particulars of each remote control devices, its different keys and functions and other details pertaining the appliance and its location in the house or the apartment along with index or protocol for the recalling of each individual control code for regenerating the control signals for operating said appliance.

The third step of the method for utilizing unknown remote control signals is therefore, the storing and indexing of the counted values of said envelope into a memory.

The steps of counting, storing and indexing unknown envelop signal generated by an RF or IR remote control device also applies to an unknown reader output signal such as card or proximity reader used in elevator, or for directly fed serial or parallel code signals, all of which can be processed and their envelopes counted, stored and indexed the same way as described for the envelopes of the received RF or IR signals.

Remote control devices, including such devices as magnetic card or a barcode card, are configured to transmit or to generate via their corresponding readers respectively a complete, whole code. Some types of remote control devices are configured to repeat the transmission of the serial coded signal, others transmit the complete serial code once per each touch of a key. However all the remote control devices transmit a complete coded signal, which commonly starts with a pilot bit, sync bit and/or start bit and ends with an end bit.

The commonly used receivers, readers and the processors for the remote control devices and/or the magnetic, proximity and other keys or cards are pre configured to read and accept only incoming coded signals that precisely match the pre configured codes, the timing of the pulses, the pulses duration and the precise start bit, the address data, command data and other exclusively configured programs to ensure that only an exclusive pre conf igured and pre programmed match can access the appliance and/or the system.

In contrast, the present invention provides for the use of any such remote control devices, including such devices as magnetic cards, barcodes, proximity keys and other access devices by recording the details of their code's envelop, which represents very accurately the remote control device' s complete unknown coded signals, including such pulse items as pilot, sync, start bit and end bit, all of which become leading pulses and ending pulses within the unknown recorded signals, stored and indexed into said memory.

Therefore, for the counting process of the present invention there is no specif ic need for pilot bit, sync bit or start bit to initiate the counting process, and the counter starts its counting whenever its gate input is fed with a rise or a fall in the envelope signal fed to it. For ending the counting and/or for completing the counting process of the received signal the counter is programmed to reset itself and stop counting whenever the high or low state remains for a longer duration than "n" milli seconds.

The resetting of the counter also provides for resetting the system' s CPU into its receiving state and for enabling the receiving of a freshly transmitted signal. It is simple to configure the "n" duration, for example, when the slowest rate of the unknown code signal is 1 kbit/sec the width of each low and/or high state of the envelope signal cannot practically exceed 1 milli second duration, therefore "n" duration of longer than, for example, 10 milli second or 100 milli seconds can be safely configured as an error free end of the transmission.

Accordingly, the next step of the method for recording and utilizing unknown coded signal is therefore the resetting of the counter and the CPU to their "receiving ready" state whenever the duration of any of the low or the high states of the envelope signal is longer than a preprogrammed "n" time duration.

It is preferable that the CPU is provided with sequencing codes recording, such that a remote control device provided with multiple alphanumeric keys for keying a programmed password can be used. A limitation for multiple keying of unknown coded signals will therefore be the time spacing between the keying, which must be longer than said "n" time duration. As the "n" time duration can be a fraction of a second, such as between 10 milli second and 100 milli second, such short time duration does not prevent in any practical way the multiple keying of a password via said keys and the recording of said remote control device's password by the CPU.

The sequence of the keying of a password, for recalling an elevator as an example, the envelope counted values of the four digits in sequence, such as 3-1-4-2 are recorded individually one after another into the memory, for which the CPU is programmed to process the four separate envelopes in the recording sequence and as will be explained later, as programmed, while operating the home automation functions.

The method and the apparatus of the present invention provides for connecting buffer circuits or modules that can be installed anywhere in the house or the apartment or in the vicinity of the appliances for generating wireless, IR, RF, bluetooth, wired data, wired relay contacts and a combination thereof for remotely operating the electrical appliances by generating coded signals from the video interphone and/or the shopping terminals panels or devices, on the basis of the recorded and indexed commands stored in said memory, which can be programmed for automatic or manual activation and processed by said CPU. The video interphone and/or the shopping terminal's monitor can display the different controls for the different appliances for recalling each function independently via touch keys, or for recalling plurality of programmed preset functions, such as "day preset" for a programmed and selected home appliance's functions in the morning or for a programmed and selected evening presets for home appliance's functions in the evening, etc.

### BRIEF DESCRIPTION OF THE DRAWINGS

The foregoing and other objects and features of the present invention will become apparent from the following description of preferred embodiments of the invention with reference to the accompanying drawings, in which:
FIG. 1 is an electrical block diagram of the apparatus for recording and utilizing unknown coded signals of the present invention;
FIGS.2A~2D are electrical block diagrams of typical digital and data signal processing, shaping, converting and counting for use with the apparatus of the present invention;
FIG.3 is an electrical block diagram of the preferred embodiment of the apparatus for recording and utilizing unknown coded signals of the present invention;
FIGS.4A-4C are waveforms processed and transmitted by the well known RF remote control devices;
FIGS.5A~5C are well known waveforms, processed, used and transmitted by access control devices and IR remote control devices;
FIGS. 6A and 6B are waveforms showing the rise and fall time errors of a demodulated envelope signal and of the counting errors of a clock gated by the demodulated envelope;
FIG.6C is a timing chart of the counted waveform of FIG.5B;
FIG.7 is a block diagram of a television interphone monitor of the preferred embodiment wherein the television interphone monitor is powered via the information transmission line and includes rechargeable battery;
FIG.8 is a block diagram of a shopping terminal of the preferred embodiment;
FIG.9A is a block diagram of a wireless relay station for propagating RF control signal of the preferred embodiment of the present invention;
FIG. 9B is a block diagram of wireless relay station for propagating IR control signals of the preferred embodiment of the present invention;
FIG. 9C is a block diagram of wireless relay station for converting RF control signals to IR control signals of preferred embodiment of the present invention;
FIG. 9D is a block diagram of wireless relay station for converting IR control signals to RF control signals of preferred embodiment of the present invention; and
FIG.10 is an illustration of a television interphone monitor or a shopping terminal of the preferred embodiment with touch screen operation.

### DETAILED DESCRIPTION OF THE PREFERRED EMBODIMENTS

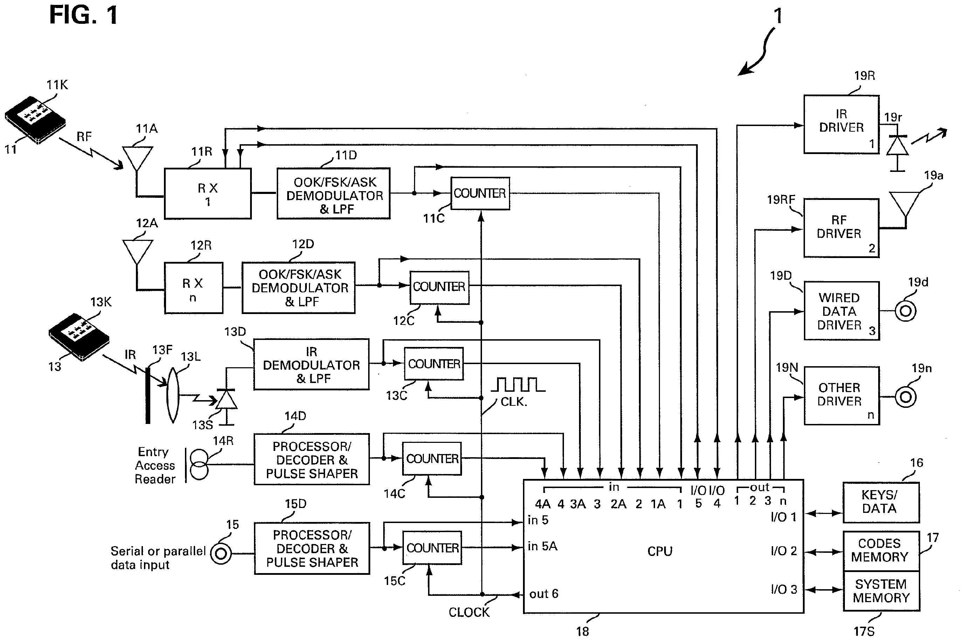

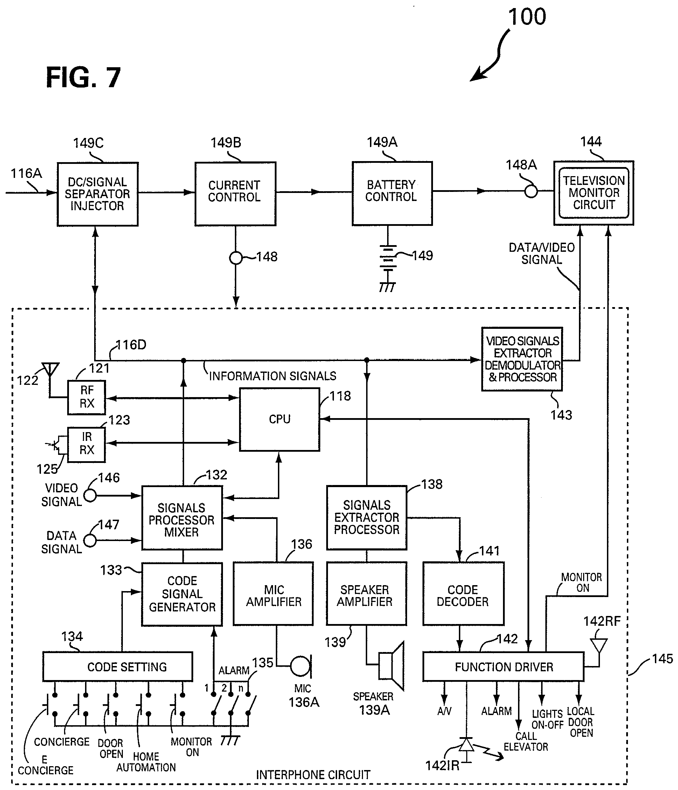

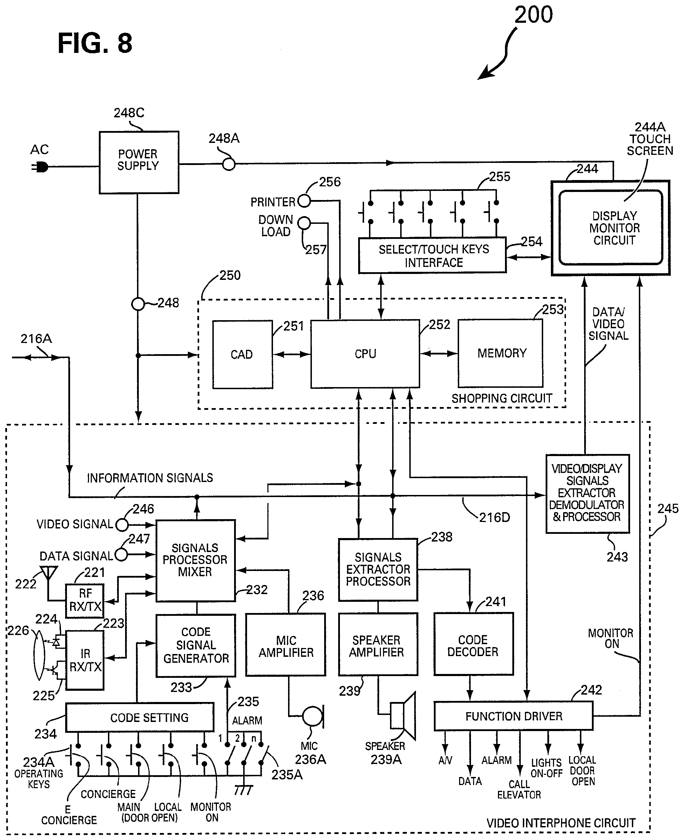

Shown in FIG.1 is the apparatus 1 for recording and utilizing unknown signals of remote control devices such as RF remote control 11, IR remote control 13, an access reader 14R and an input 15 for a serial or parallel data. The apparatus 1 includes n number of RF receivers shown in FIG. 1 as 11R and 12R, each of said receivers is connected to a receiving antenna 11A and 12A and to a demodulator circuit 11D and 12D respectively. Each of the demodulator output is fed to a counter 11C and 12C and to a respective input 1 and 2 of the CPU 18. The CPU 18 is connected through its I/O 2 and I/O 3 terminals to a memory 17 and 17S for recording counted data of unknown signals generated by said remote control devices and by said access reader 14R and said data through said input 15, as well as to record information pertaining the appliances, the remote control devices, the system operation and its parameters. The CPU 18 is further connected to the control circuit 16, which is an internal circuit of the CPU 18, but shown in FIG.1 as a separate circuit and to the control keys 16. The control keys 16 are used for processing the recording of the unknown coded signals and for entering data pertaining the remote control device and the respective remote controlled appliance, its location and function and any other details needed to operate the appliance. The keys 16 can also be used to setup the functions of the apparatus 1 that may be connected to a given system such as video interphone system shown in FIG.7, to a shopping terminal shown in FIG.8 or to a home control system (not shown). The control keys 16 can be a well-known ASCII keyboard such as used for PC, or it can be a set of push, touch, touch screen or other keys of the apparatus 1.

The CPU 18 is further connected to "n" drivers shown as 19R, 19RF, 19D and 19N for providing driver outputs fed through terminals out 1 ~ n of the CPU. The driver output 19r, 19a, 19d and 19n can be wireless, IR or a relay output, alternatively the driver circuit can be a buffer amplifier for outputting serial or parallel coded command for recalling elevators or for arming or disarming alarm or emergency devices and systems and/or for switching on or off lighting system or operating A/V and similar appliances.

Each of the outputs of the demodulators 11D and 12D is connected individually to a gated input of a respective counter 11C and 12C for counting a clock fed from the output terminal 1C of the CPU 18 to the clock input of the counters 11C and 12C.

The counters 11C and 12C are up-down counters with a separate preset output and are gated by the envelope signals fed from the demodulators 11D and 12D. The up-down counting is set by the rise and the fall time of the gate signal, wherein a pulse rise resets the counter to zero and starts the up counting, while a pulse fall also resets the counter to zero but starts the down counting.

The receivers 11R and 12R are well known receivers in the UHF band, that are commonly available in a single chip IC at low cost, and include the demodulator circuit 11D and 12D that are shown in FIG.1 as a separate demodulator and LPF circuit. The receiver RX1 11R and RXn 12R are n number of receivers to cover any number of specific frequencies and or bands within the permissible spectrum of the UHF band. The frequencies used for remote control devices and for short distance data communication are known in the USA as unlicensed frequencies, approved by FCC and are identified as specific frequencies of 308.825 MHz, 315 MHz, 418 MHz, 433 MHz, 914 MHz and 916.5 MHz, or as 303-315 MHz band, 415-435 MHz band and 913~918 MHz band. Though these frequencies are freely available, the FCC attaches very stringent limits, governing the transmission power to a maximum of micro watts and milli watt levels. This mandates very sensitive receivers, which means, tuned receivers with narrow bandwidth for improving the signal to noise ratio. Other radio frequencies in the Giga Hertz range of 2.4GH and the like, or any other frequencies such as used with wireless keyboards for PC, Bluetooth or Wi-Fi can be used instead.

It is possible to use single broadband receiver to cover the entire UHF spectrum of 300 MHz - 950 MHz range or any other spectrum range, but such wide band receiver cannot have good signal to noise ratio for the very low signals generated by the remote control devices.

Therefore, to obtain better reception and to improve upon the signal to noise ratio of the receivers it is advisable to use in the USA at least two receivers one covering the 300 MHz - 450 MHz band and the other covering the 900 MHz - 930 MHz band. The preferable setup will be three receivers, the first for 308 MHz ~ 315 MHz, the second for 415 MHz - 435 MHz and the third for 913 MHz - 918 MHz. Such narrow bands can provide high sensitivity and low noise reception and due to the very low cost of such single chip receiver IC, the including of three receivers or more such as one for each specific frequency is very cost performance effective.

Another method employing a broad band receiver, for covering the entire UHF spectrum, particularly the three ranges of the unlicensed frequencies of 308 - 315 MHz, 415 ~ 435 MHz and 913 ~ 918 MHz, is to provide a frequency scanning receiver, incorporating variable and/or step oscillator circuit anda signal level measuring circuit including such a circuit as analog to digital converter incorporated into the CPU 18 or 18A for measuring the transmitted RF signal level and a counter for measuring the transmitted frequency. With such a scanning receiver, it is possible to automatically or manually activate the scanning circuit by generating remote control command through the remote control key 11K of the wireless remote control device 11. The scanning can be made also in three independent steps, covering the three frequency ranges of 308 ~ 315MHz, 415 -435 MHz and 913 ~ 918 MHz.

Shown in FIG.1 the RX1 11R is fed with scan control line through the I/O 4 port of the CPU 18 and feeds back a level reference signal and frequency readout to I/O 5 port of the CPU 18. With this scanning receiver it is possible to have one receiver that covers any of the unlicensed frequencies and at a workable signal to noise ratios. Further since the recording of the unknown remote control device's signals can be executed with the remote control device positioned at a close distance to the receiver or its antenna such as 10 cm (4") or even shorter distance, a broad band receiver or a scanning receiver is a very practical solution for receiving, processing and recording the unknown wireless coded signals. Another advantages of a scanned frequency receiver are the use of the frequency readout for controlling of the frequency of the regenerated wireless command by the RF driver 19RF. Usingvariable frequency transmitter the RF driver 19RF can be commanded to transmit different frequencies, identical to the frequency received by the RX1 receiver 11R from each individual wireless remote control device 11, of each individual appliance.

Each of the shown receivers RX1 11R and RXn 12R are connected to an individual antenna 11A and 12A respectively and because commonly the antenna's length is equal to 1/4 or 1/8 of the wave length, they can be a line or a loop designed onto the printed circuit board of the apparatus 1, with literal insignificant cost in production.

The demodulators 11D and 12D shown in FIG.1 as a separate circuit include well known circuits that are designed for demodulation on-off keying, known as OOK modulation, amplitude shift keying, known as ASK or AM modulation and frequency shift keying, known as FSK or FM modulation.

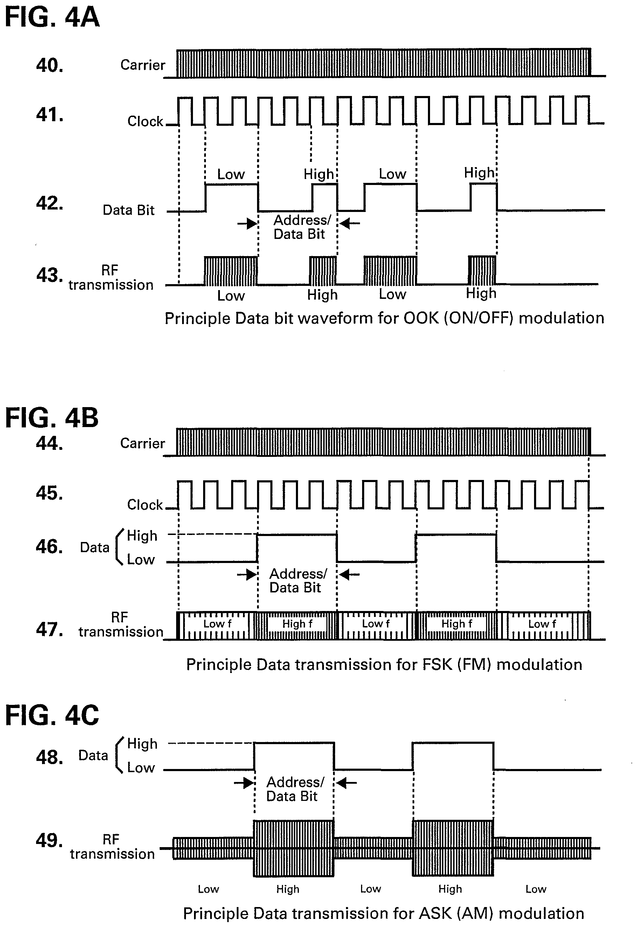

Shown in FIG.4A is a typical OOK modulation waveform known as On-Off Keying. The carrier signal 40 is keyed on and off by the data bit pulses 42 comprising narrow pulses for high state and wide pulses for low state, however the width of the pulses can be reversed. The narrow and the wide pulses are generated on the basis of integer number of clock pulses 41, such as one clock width is high and two clock width is low, as shown in the waveform 42. The data bit pulses key on and off the carrier 40 to transmit coded RF signal shown in waveform 43.

FIG.4B shows a typical waveform of FSK or FM modulation known as Frequency Shift Keying. The frequency of the carrier signal 44 is shown as the high state frequency of the RF transmission shown in the waveform 47. The data shown in waveform 46 is the high-low level data of the commonly known digital data. Here too the data is synchronized with the clock 45 for keying synchronously the carrier to shift the frequency to a low state. The high and the low state of the carrier frequencies can be high frequency for high and low frequency for low, as shown in waveform 47, but the frequencies can be reversed. The difference between the FM and FSK modulation is the range of shifting frequencies, wherein FM provide for varying frequency change and the FSK is limited to the switching over of two frequencies.

FIG.4C shows typical waveforms of ASK and AM modulation, known as Amplitude Shift Keying. The carrier of FIG.4C is the same carrier shown in waveform 44 and the data waveform 48 is the same data shown in the waveform 46. The RF transmission shown in waveform 49 is typical well known dual side band amplitude modulation, and in practice the ASK uses the well known single side band amplitude modulation. Here too the difference between the ASK and AM modulation is the varying levels of amplitude modulation and the fixed two levels for ASK modulation. Also, though the High bit data 48 shows high carrier level 49 and Low bit data 48 is transmitted as low level carrier 49, this can be reversed as well.

The pulse durations of the lows and highs of the waveforms 46 and 48 are shown with identical time duration for the high and low data, however the pulse duration or the pulse width commonly used for FSK, FM, ASK and AM modulations are the data bit shown in 42.

The RF transmitters for generating waveforms such as shown in FIGS.4A, 4B and 4C used for the remote control devices 11 of FIG. 1 are commonly available in a single package ICs at low cost, or are made by standard well known circuit components, such as transistors, diodes, filters, coils and other known electric components.

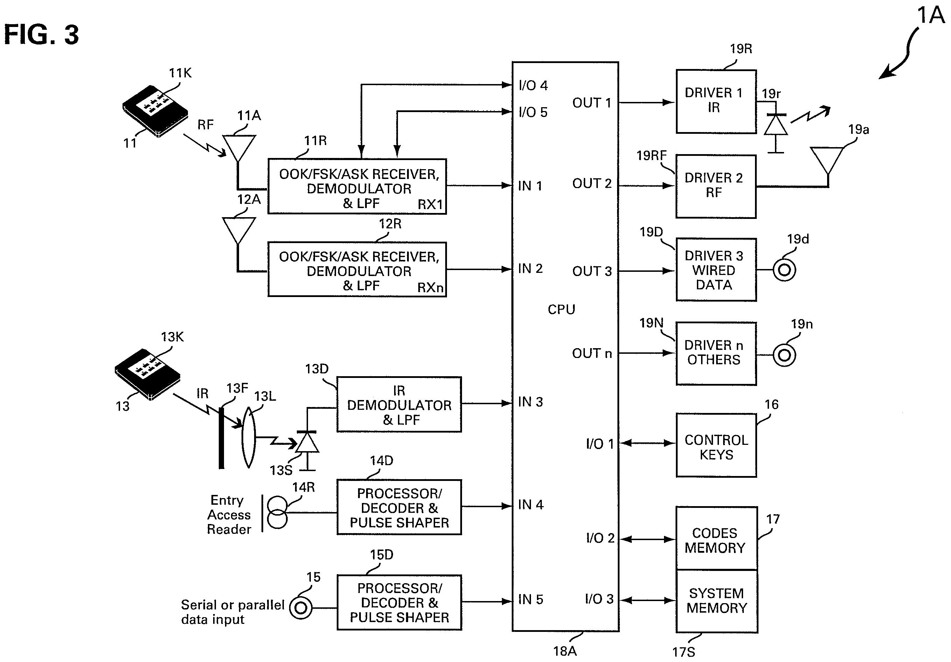

Similarly, the well known single package receiver ICs shown in FIG.3 as RX1 11R and RXn 12R include the demodulator circuit 11D and 12D of FIG.1 and are commercially available at low cost. Otherwise, the demodulators such as 11D and 12D can be made by standard well known circuit components, such as transistors, diodes, filters, coils and other known electric components and designed to accommodate and demodulate an OOK, ASK, AM, FSK or FM modulated signal.

The remote control device 11 is activated by a push or touch key 11K for transmitting a serially coded RF modulated signal. The serial code for modulating the RF signal or the encoding signal is a low frequency signal, having baud rate in a range of up to 1kbit/sec. The commonly used remote control devices 11 will transmit the whole code at least once per each touch of the key 11K and the transmitted RF signal is received by the receiver 11R or 12R through its antenna 11A or 12A. The receiver output signal is fed to the demodulator 11D or 12D respectively for demodulating and filtering the signal.

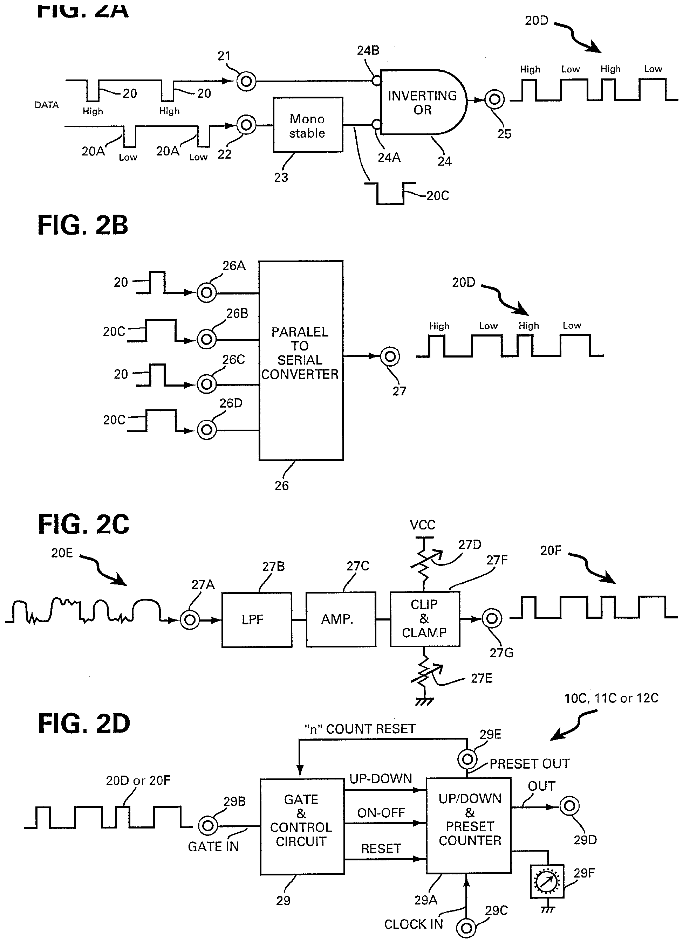

The demodulated filtered signal is a low frequency envelope of the original encoded transmission, generated by the remote control device 11. The envelope signal is outputted from the demodulator through a well known Low Pass Filter 27B, known as LPF shown in FIG.2C, that allows the low frequency of the envelope to pass and blocks the high frequency carrier and/or the high frequency noises from the output signals, by this the demodulated filtered output or the envelope signal is reproduced into clean envelope of the original code generated by a given remote control device 11.

The filtered envelope signal can be further processed by a well known digital circuits such as digital signal amplifier 27C shown in FIG.2C for amplifying the signals to an over size signal, a well known clipper circuit and a clamping circuit 27F for clipping the signal to its specified level and for clamping the envelope lows or highs to a selected references, selected through, for example, the potentiometers 27D and/or 27E shown in FIG. 2C, thereby providing a clean envelope signal 20F with sharper edges, noise free and with specified levels and clamped. Further, the envelope signal can be reversed by a well-known inverter circuit such as the inverting gate 24 shown in FIG. 2A, for unifying the polarities of the envelope signals of the different remote control devices 11, even though such unified polarities are not necessary for the recording and utilizing unknown coded signals of the present invention.

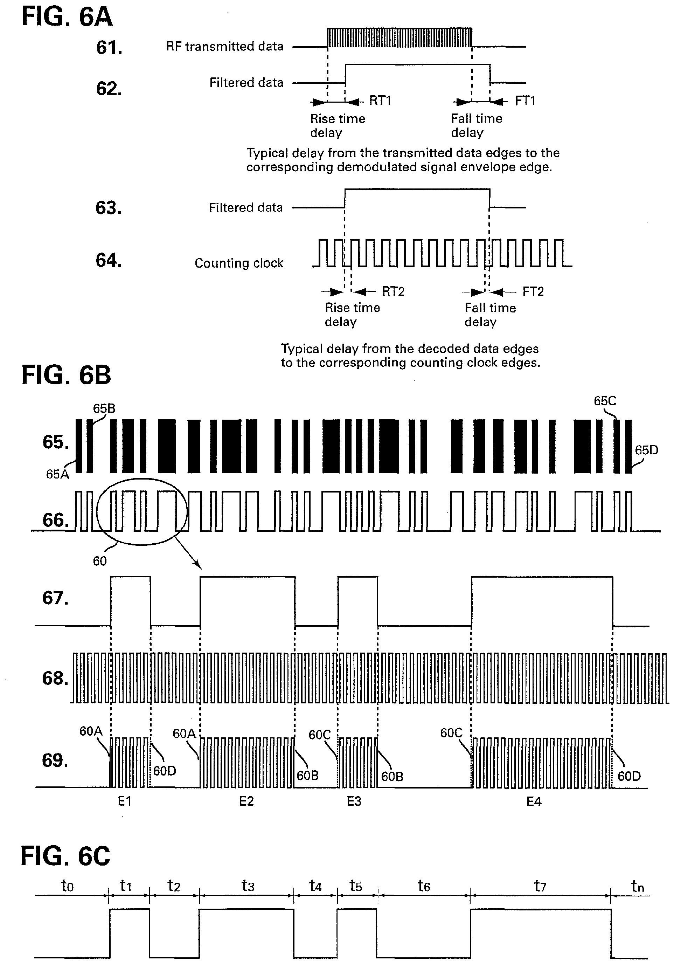

There is a timing error in the rise and fall times of each individual pulse of the filtered envelope because of the signal processing delay, shown in FIG.6A. The timing of the rise and fall of the envelope signal 61 shows a time delay of RT1 and FT1 versus the rise and fall time of the received RF signal 61, however the time errors are repetitious, and as will be explained later, because the errors are repetitious they present no errors for the recording and the utilization of unknown coded signals of the present invention.

The envelope signal 20D or 20F is fed to a gate input 29B of a counter 11C or 12C shown in FIG.2D and to an input 1A or 2A of the CPU 18. Many different well known counters and counting methods can be used for recording and utilizing the unknown coded signals, and moreover many of the current well known CPUs that are commercially available at low cost incorporate counting and timing circuits, thereby providing for connecting and feeding the envelope signal directly to the CPU, making the counters 11C and 12C as a separate circuit unnecessary and not used, which is the preferred embodiment of this invention as shown in FIG.3. However for clarification the counter is explained below as a separate circuit.

The counting input 29C of the counter is fed with high frequency clock outputted from the CPU out 6 terminal, for example 100MHz, by this the counting error of a single pulse width of the unknown coded envelope and/or the fall or rise time during the counting of the envelope is reduced to units of 0.01µsec or 10nsec, which are insignificant time units for the low frequencies of the unknown coded signals that may range from 200Hz and up to 50kHz.

Shown in FIG.6A is the filtered data envelope 63, which gates the counter 11C or 12C for counting the clock 64. As shown in FIG. 6A the rise and fall timing errors between the non synchronous envelope 63 and the clock signal 64 are RT2 and FT2, however since the timing errors cannot exceed the time duration of for example 10nsec of the example clock frequency of 100MHz, such timing errors of less than 10nsec are wholly insignificant for the accuracy of the counting process and its influence on the utilization of the unknown coded signals generated by said remote control devices.

The portion 60 of the envelope 66 of the barcode 65 shown in FIG.6B is expanded for showing the details of the counting errors associated with the rise and fall times. The envelope 67, which is the expanded waveform of the portion 60, is the gating signal for the counter 11C, 12C, 13C, 14C or 15C. The clock 68 is the clock fed to the counter's clocking input of FIG.2D and which is non synchronized with the gating signal 67. Therefore the rise and fall times of the signal 67 and of the signal 68 are random times.

The result of this non synchronous state is shown in the waveform 69, wherein 60A and 60B are the rise and fall times with correct coincident of time between the signals 67 and 68, while the rise time 60C and the fall time 60D are error coincident of timing, between the two signals.

The waveform 69 shows the counting or timing errors of Pulse E1 having fall time error 60D, Pulse E2 having correct coincident of times or no timing errors, Pulse E3 having rise time error 60C and Pulse E4 having dual coincident of times error, shown as timing errors 60C and 60D.

From the above waveform 69 it becomes obvious that the maximum counting or timing error per pulse count is two half cycle values of the clock per pulse as shown in Pulse E4 of waveform 69, or 50% x 2 clock pulses duration. In the example of the 100MHz clock discussed above this will be 0.5 x 2 x 10⁻⁸ x Sec. = 10nano Sec. Such short time errors can be ignored altogether, and as will be explained later, it is simple to program a range of tolerances for permitting such errors to be ignored.

The counter 11C or 12C shown in FIG. 2D is an up-down counter with a separate preset output 29E and is gated by the envelop signal 20D or 20F that is fed to the gate and control circuit 29 such that a pulse rise resets the counter 29A to zero and starts the up counting, while a pulse fall also resets the counter 29A to zero but starts the down counting. The counter feeds to the respective input terminals 1A and 2A of the CPU 18 of FIG.1 a positive count number for the duration of the highs of the envelope and a negative count number for the duration of the lows of the envelope.

The CPU 18 that is also fed directly through its input terminals 1 and 2 with the envelope signal and reads directly the details of the envelope, can therefore record the duration of each individual high and low of the envelop signal, the number of highs and lows, the total lows, the total highs and the total length of the unknown code, these along with the counted values of each high and low and the total count or the sum pertaining the unknown coded signal as represented by the envelope. Considering the example of the 100MHz clock, the counting accuracy of ± one count will be ± 10nsec time unit per pulse, which is insignificant.

Further, while the coded RF signals explained above, which includes also the coded IR signals, are based on two defined states, the high and the low, the RF coded signals can be AM or FM modulated to provide more than two states, similar to the barcode readers that identify multi width bars and intervals or spacings, such as the barcode 65 of FIG.6B, for reading the full data contained in the barcode. The present invention provides for counting, detecting and defining not only high and low on the basis of the envelope's high and low counts, but also to detect the state of the pulse on the basis of the identified pulse width, such as three states low, mid and high, or such as five states low, mid low, mid, mid high and high to be used.

Moreover the combination of counting the unknown coded signals through the counter 11C or 12C or through the CPU's 18A counting circuit and through the direct feeding of the envelope to the CPU input, enables many combinations for utilizing of the unknown coded signal such as the duration of each high and each low of the envelope, the time duration of each high, each mid and each low state, the sequence of each high, each mid and each low state, the total number of high states, mid states and low states, the total lows duration, total mids duration and total highs duration, the total count of lows, mids and highs, the total counted sum, the absolute total length of the envelope of said unknown code in clock count and in time and the polarity of the envelope and a combination thereof.

The above counted values of said unknown coded envelope of an unknown coded signal are recorded by storing the counting details into the memory 17 of FIG.1 and FIG. 3. The stored values become the reference for utilizing said unknown coded envelope.

Shown in FIG.6C is the recording of the principle timing details of the envelope shown in 67 of FIG.6B. The shown time duration t1, t3, t5 and t7 are the time duration of the envelope highs, while t2, t4 and t6 are the time duration of the envelope lows. The combined envelope time is the sum up of t1~t7, the total sum = t1+t3+t5+t7-t2-t4-t6. The total envelope highs shown is 4 and total envelope lows shown is 3.

Referring to waveform 67 of FIG.6B and to FIG.6C it will become clear for example that; E1 and E3 are shown as the narrowest high pulses of the envelope with t1 = t5, and therefore can be detected or defined as the high state pulse, the duration of E4 or t7 is shown as the longest, and therefore can be detected or defined as the low state pulse. E2 or t3 is the median duration pulse and thus, can be defined as mid state pulse. Same applies to the lows or the interval times of the envelope, shown as t2, t4 and t6 in FIG.6C. t2 and t4 are shown as a narrow time and can be detected or defined as shortest low of the envelope, t6 is shown with the longest duration and therefore can be defined as longest low. As shown in the barcode envelope waveform 66 of FIG. 6B, there are several different envelope lows durations, all of which can be detected and defined as short mid, mid or long mid. This extensive data pertaining every detail of the envelope signals along with the ability to define multi level of states that are beyond the two binary states of high and lows of the digital signals, makes the recording of the envelope signals very reliable. The time duration t0 is a non-active state. It is shown in FIG.6C as low state, but can be high state as well. The t0 should not be calculated into the total sum or total duration of the code. tn is the last counted duration, which exceeds a pre-selected or programmed time duration, such as 10msec. or 100msec. Longer time duration of a low or high state will terminate the recording or the counting of a freshly received unknown coded signal. As will be explained later the tn is therefore a fixed time duration that may be calculated into the total sum, or the total duration of the code, or it can be ignored.

During the recording of an unknown coded signal it is necessary to record related items and data associated with or indexed to the recording. This is necessary for all the remote controlled appliances associated with the video interphone or intercom systems used in the house or the apartment. It is also necessary for identifying the particulars for the driver circuits 19R, 19RF, 19D and 19N to output the programmed signals for correctly controlling the different appliances.

Therefore, the indexed recording of the codes for the operation of the appliances, including the appliances locations such as the emergency and other lighting systems to be activated, the operation of air conditioners, kitchen and garden appliances, switching on and off background music (BGM) and its volume and/or the operation of home theater, DVD or VHS recorders and other A/V systems and the like needed to be recorded into the system memory 17S. The code memory 17 and the system memory 17S are shown as a separate memory circuits, but can be combined or partitioned into any well-known memory device, such as flash memory, or into a flash memory that is included in the CPU 18 or 18A.

The apparatus 1 and 1A of FIG.1 and FIG.3 for recording and utilizing unknown coded signal of the present invention provides for the use of IR remote control devices 13 the same way it provides for the RF remote control devices 10. For this purpose at least one IR receiver comprising IR pass filter 13F, lens 13L and photo sensing diode 13S, along with demodulator and processing circuit 13 are incorporated in the apparatus for recording and utilizing unknown coded signals 1 and 1A. A filter with a wavelength of 940nm band is commonly employed for IR remote controls and it is simple to provide an IR sensor, such as photo transistor or pin diode and a filter covering wider band, such as 850nm ~ 980nm.

The demodulator 13D for demodulating and processing the received IR signals is similar to said RF demodulators 11D or 12D. The commonly used demodulator circuit 13D is OOK type because the commonly used IR remote control devices are operated on the basis of on-off keying, but any other modulation and demodulation circuits can be employed.

The steps of demodulating, filtering, counting and storing the unknown coded signal generated by an IR remote control device 13 are same as the steps described for the received RF signals. Same steps of processing, counting and storing also applies to an unknown code of an access key, such as magnetic key processed by the reader 14R, or to the directly fed unknown serial or parallel code signals to input 15, all of which are processed and their envelopes are shaped, filtered, counted and stored the same way as described for the received RF or IR signals.

The remote control devices, including such devices as magnetic card or a barcode card, are configured to transmit or to generate via their corresponding readers respectively a complete, whole code. Some types of remote control devices are configured to repeat the transmission of the serial coded signal, others transmit the complete serial code once per each touch of a key. However all the remote control devices transmit a complete coded signal, which commonly starts with a pilot bit, sync bit and/or start bit and ends with an end bit.

The commonly used receivers, readers and the processors for the remote control devices and/or the magnetic, proximity and other keys or cards are pre configured to read and accept only incoming coded signals that precisely match the pre configured codes, the timing of the pulses, the pulses duration and the precise start bit, the address data, command data and other exclusively configured programs to ensure that only an exclusive pre configured and pre programmed match can access the appliance and/or the system.

Shown in FIG.6B is a bar code 65 of a well known barcode standard, in which the width of the bars, the spacing between the bars, the number of bars and the width of the spacing are preprogrammed data for pre-configured access. The two shown narrow bars 65A and 65B at the left side of the bar 65 are the start bars or the start bit shown in 66 and the two narrow bars 65C and 65D are the end bars or end bits shown in 66. Accordingly, the barcode reader will not process the bar code unless the start bits and end bits are correctly read.

In contrast, the present invention provides for the use of any such remote control devices, for example, elderly people may use emergency remote control device such as bracelet, charm, pendant or button for transmitting RF or IR signals during emergency, while others may use cards, tags or strip with mechanical code, magnetic code, bar code, or other optical code. The remote control devices may further include such devices as magnetic keys, barcodes, proximity keys, RFID contactless card and other devices by recording the complete unknown coded signals generated by the device or its reader, including such pulse items as pilot, sync, start bit and end bit, all of which become leading pulses and ending pulses within the unknown recorded signals, stored into said memory.

Therefore, for the counting process of the present invention there is no need for pilot bit, sync bit or start bit to initiate the counting process, and the counter starts its counting whenever its gate input is fed with a rise or a fall in the envelope signal fed to it. For ending the counting and/or for completing the counting process of the received signal the counter is programmed to reset itself and stop counting whenever the high or low state remains for a longer duration than "n" milli seconds.

The counter 11C or 12C, shown in FIG. 2D incorporate a preset setting selector 29F for selecting a preset time duration count, or for selecting a preset clock count, representing time duration, for example 10,000 clock pulses count of 100MHz clock is equal to 0.1 milli sec. The example counter 11C or 12C is designed to stop counting when the preset number is reached and change the state of preset out 29E from low to high, but can be also from high to low. The preset out is fed to the gate and control circuit 29 for resetting the counter 29A through the reset line to zero and to stop the counting by switching the on-off line to off state. By this the counter 11C or 12C is reset to its "ready for counting" state, awaiting next fed rise or fall time of a signal fed to its gate input 29B. As the signal is fed the gate switches its on-off command line to on state and its up-down command line in accordance to the rise or fall state of the received signal. This arrangement of the counting process provides for repetitious counting of the unknown coded signal without errors.

The resetting of the counter 11C, 12C, 13C, 14C or 15C also provide for resetting the system's CPU 18 or 18A into its receiving state and for enabling the receiving of a freshly transmitted unknown coded signal. It is simple to configure the "n" duration, for example, when the slowest rate possible of the unknown code signal is 1 kbit/sec., the width of each low and/or high state of the envelope signal cannot practically exceed 1 milli second duration, therefore "n" duration of longer than, for example, 10 milli second or 100 milli seconds can be safely configured as an error free end of the transmission, or to identify no transmission state and therefore, provide for the counter to reset itself and the resetting of the CPU to its "receiving ready" state, readying the system for the next fresh receiving.

As the gate input 29B is sensitive to rise and fall times of the signal fed to it and therefore, it is sensitive to random noises, particularly high frequency noises, and moreover, to a noisy unknown coded signal that may reach the gate input 29B because of weak RF reception, such as may be caused by use of the remote control devices 10 from far distance, generating noisy fed signal 20E shown in FIG.2C. Therefore, the signals fed to the counter 11C, 12C and the counters 13C, 14C and 15C and/or to the CPU 18 of FIG. 1 and 18A of FIG. 3 , need to be processed and f iltered through a LPF circuit such as 27B shown in FIG.2C or other type of well known filters, amplified and clipped and/or clamped as explained, in order to output clean, sharp edged envelope signal such as the signal 20F shown in FIG.2C.

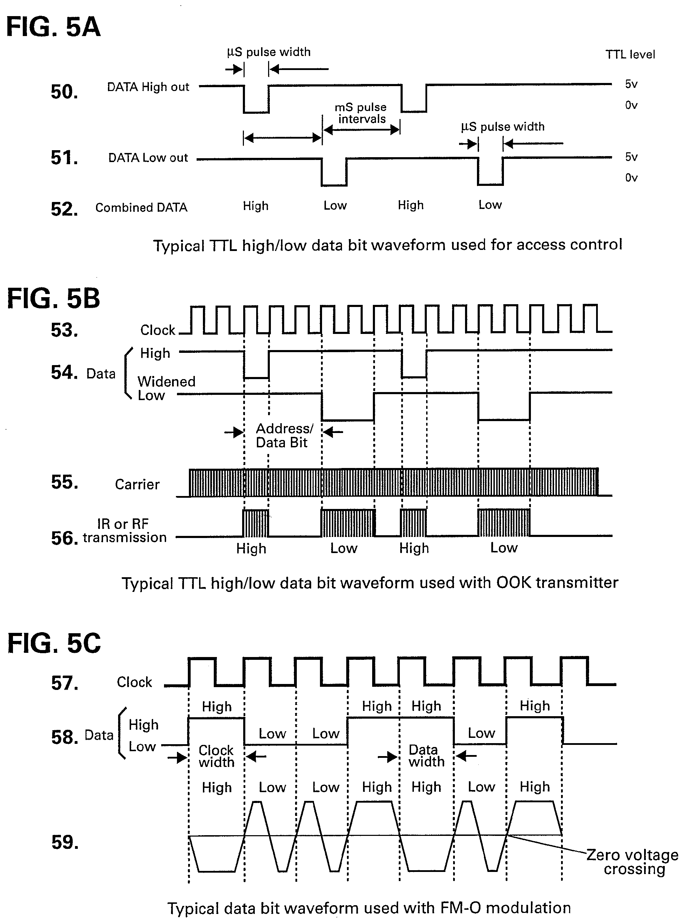

Some remote control systems such as systems using access readers for contactless keys, including proximity keys or RFID devices, employ communication lines that propagate the data lows and the data highs of the coded signals via two separate drivers as shown in FIG.2A. The reversed polarity pulses 20 and 20A are the high data pulses and the low data pulses. To use such propagated data signals with the present invention for recording and utilizing unknown coded signal the data lows and data highs must be combined into a single input however, the width of the low 20A and the high 20 data pulses is same and the time interval between the pulses is identical. Shown in FIG.5A are the details of the data high out 50 and the data low out 51 and wherein the pulse width in micro seconds and pulse interval in milli seconds are identical for the low and the high data pulses. The reading of the combined data shown in 52 is only possible with the two separated outputs. This prevents the combining of the data low and high in their present form into a serial code via a single line, as there will be no difference between the low data and the high data pulses.

To overcome this and similar confusing data signals, having identical pulses for the high and the low state, the low data line is fed to an input of the well known mono stable 23 shown in FIG.2A that generates for each received pulse a single pulse with pre selected width, for widening, for example, the pulse width of the low data and outputting wider low data pulse 20C. Having two different pulse widths for the low and the high data makes it possible to combine the two separate lines into one. As shown in FIG.2A the high data is directly fed to the input 24B of the OR gate 24 and the low data line with the wider data pulses are fed to the input 24A of the OR gate 24. By this the two data lines are gated one after the other and combined into one serial code outputted from the output 25 of the or gate.

The serial code 20D is inverted signal for providing unified processing for all the received unknown coded signals and for this purpose the OR gate 24 shown in FIG.2A is an inverting OR gate. However this inversion of the unknown coded signal is not necessary and non- inverting OR gate can be used instead. The shown circuit in FIG.2A is not necessary when the two separate input lines are f eddirectly into the CPU 18 or 18Aand the CPU is programmed to output a serial signal 20D, in which case the mono stable 23 and the inverting or gate 24 are unnecessary and are not used.

Therefore, an unknown parallel or serially coded outputs can be fed to the counter 14C or 15C and/or to the CPU 18 or 18A, while the storing of the received unknown coded signal, such as shown in FIG.2A or FIG.2B, is processed in the same way as described for the data generated by the RF or IR remote control devices.

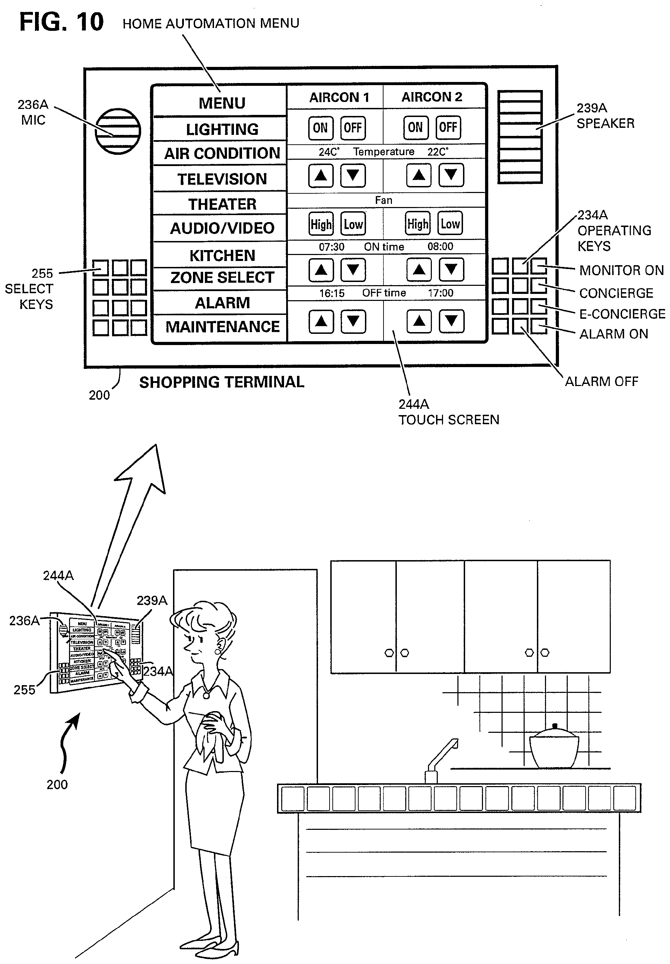

Another example of a modulated or encoded unknown code signal is the well-known FM-0 data signal shown in FIG.5C. The FM-0 modulated or encoded signal is synchronized with the clock 57 and timed by the synchronous data signal 58 to generate the waveform 59 and is used in access control and security systems network for connecting to access control readers and alarm devices. Accordingly a demodulator or decoder for demodulating or decoding the FM-0 modulated unknown coded signal can be included in apparatus 1 or 1A of FIG. 1 and FIG. 3 respectively. The decoder for the FM-0, not shown, is commonly available in a single package IC at low cost. By the inclusion of FM-0 demodulator or decoder to the processor/decoder and shaper circuit 14D or 15D makes the apparatus 1 or 1A of FIG.1 and FIG.3 more flexible for connecting variety of access devices of a buildings and homes to the video interphone system to be used by tenants to arm or disarm their alarm system and switch on the lighting automatically as they enter their home, or manually through the video interphone monitor' s or the shopping terminal's keys 255 or the touch screen 244A shown in FIG.8 and FIG.10 respectively.

Some type of readers generate and output parallel data, which also cannot be processed by the apparatus 1 or 1A as is, for this purpose it is possible to include a well known parallel to serial code converter 26 as shown in FIG.2B for the processing circuits 14D or 15D of FIG.1 and FIG. 3. The parallel to serial converter is commonly available in a single chip IC at low cost and it provides for inputtingparallel high and low data through its input terminals 26A, 26B, 26C and 26D and outputting a serial code 20D through its output terminal 27. By this the apparatus 1 and 1A of the present invention becomes even more flexible apparatus for recording and utilizing unknown coded signals of remote control devices.

It is preferable that the RF and IR remote control devices are equipped with multiple touch keys 11K or 13K shown in FIG.1 and FIG.3 such as numeric keys, for example, enabling the user to operate appliances, such as a parking barrier by keying a programmed password through the touch keys 11K or 13K of the remote control device 11 or 13 . A limitation for multiple keying of unknown coded signals will therefore be the time spacing or interval between the keying, which must be longer than said "n" time duration. As the "n" time duration is a fraction of a second, such as between 10 milli second and 100 milli second, such short time duration does not prevent in any practical way the multiple keying of a password via said keys 11K or 13K of said remote control device 11 or 13.

The sequence of the keying of a password, for example such as 3-1-4-2, will be the countedvalues of the four individual envelopes in sequence of 3-1-4-2 that are recorded individually, one after another into the memory 17, for which the CPU 18 or 18A is programmed to record the four separate envelope counts individually and in the keyed sequence and to regenerate the signals in sequence as recorded, for enabling the activation or deactivation of said appliances and/or of said systems through a single operating key 255 or the touch screen 244A of the shopping terminal 200 shown in FIG.8.

Other programs can be devised to provide tolerances for permitting pre-configured errors in the recording and regenerating processes, such as for permitting counting errors due to rise and fall times, this is to prevent insignificant errors from disturbing the remote control of appliances by the system.

A well known video interphone system described in details in US patent numbers 5,923,363, 6,603,842 and 6,940,957, and the shopping terminal disclosed in US Patent application 10/864,311 dated 6.8.2004 employ LCD or other display device and control keys, including such control keys as the well known touch screen, wherein the user touches an illustrated buttons or icons, displayed on the monitor screen for operating a selected appliance. The above referenced patents disclose in detail the operation of the video interphones and the shopping terminal, along with the IR or RF receivers and transmitters and other drivers they use for operating appliances.

Shown in FIG. 7 is a video interphone 140 including code setting circuit 134 and data signal input 147 for processing data, such as the serial or parallel data input 15 of Fig.1. The video interphone also incorporate function driver 142 for operating electrical appliances, such as lights on-off, similar to the driver 19D or driver 19N of Fig.1.

Shown in FIG.8 is a shopping terminal 150A combining shopping circuit 150 and video interphone circuit 145. The shopping circuit includes CPU 152 and a memory 153, which are similar to the CPU 18 or 18A and the combined memory 17 and 17S. The shopping terminal 150A further combines a touch screen 144A attached to the display monitor 144 and operating keys 155 and a touch screen interface 154, for processing and operating the touch screen of the shopping terminal 150A combined with the video interphone 145.

The video interphone circuit 145 includes wireless or RF RX/TX (receiver/transmitter) 121, similar to the wireless or RF receivers 11R or 12R and including RF driver 19RF of FIG.1 and FIG.3. The IR RX/TX 123 of FIG. 8 is also similar to the IR receiver 13S and the IR driver 19R of FIG.1. The details of the RF RX/TX circuit 121 and the IR RX/TX circuit 123 are fully described in the US patent application 10/864/311, but are essentially identical to the detailed explanation of the RF receiver 11R, the RF driver 19RF, the IR receiver 13S and the IR driver 19R is this application.

A single RF driver 19RF incorporated in the video interphone 100 or the shopping terminal 200 can propagate wireless remote control commands to any of the appliances that are remotely operated by RF signal. In very large homes or apartments where the low power RF signal cannot reach all the rooms, it is possible to connect to the video interphone system several RF drivers that are installed in different locations within the house, or in the vicinities of the respective appliances.

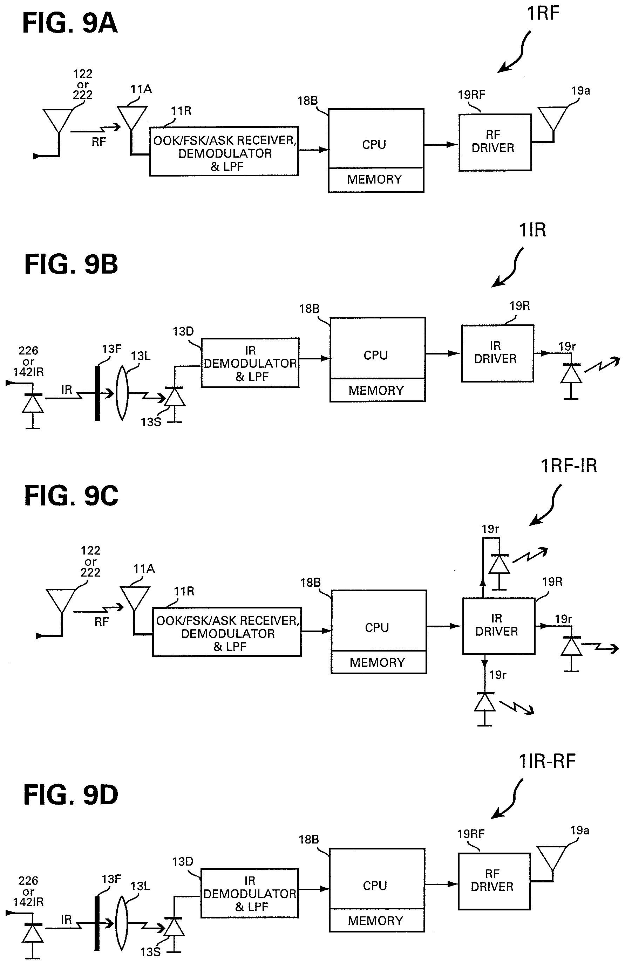

The CPU 18 of Fig.1, the CPU 18A of FIG. 3 and the CPU, 152 of FIG. 8 can be a well known microprocessor used for PC such as the well known Pentium by Intel and other microprocessors, or it can be a well known digital signal processor, also known as DSP device, or it can be well known custom programmed gate array or similar custom programmed devices. As explained below, it is preferable to use a single package CPU 18A of FIG.3 consuming low power and includes a memory 17 and 17S, such as flash memory. Such single package CPU can be incorporated in a relay station apparatus of the present invention, shown in FIGS.9A, 9B, 9C and 9D, which provides for propagating wireless control commands throughout the home or the apartment.

The IR driver 19R comprises a well known driver amplifier, not shown, and IR generator/transmitter 19r, which is IR LED driven by the driver amplifier. The IR transmitter or the LED 19r must be visually directed toward the IR remotely controlled appliance, For this reason it may be necessary to install a remote IR drivers 19R having wide angle LED 19r onto a wall or the ceiling in each room of a house, or IR drivers 19 with specific visual angle directed toward a specific remotely controlled appliance. The RF or IR drivers can be therefore connected via a communication line or lines to the video interphone system, such as the lines connected to the out terminals 1 - n of the CPU 18 or 18A of FIG.1 and FIG. 3 and fed with control commands by the CPU on the basis of the stored and indexed codes for generating wireless, RF or IR control codes to the respective appliances.

The RF driver 19RF, similar to the RF receiver 11R is readily available in a low cost single ICpackage, consuming minimal current of micro amperes and can be operated by a small size battery for long periods, particularly as it is operated for short durations needed to generate and transmit the low power RF control commands. In fact many RF transceivers (receiver and transmitter) packaged into single IC are readily available at low cost. Therefore the use of such single packaged transceiver IC along with a single package low current consuming CPU 18B including a memory, transforms the transceiver into RF relay station 1RF shown in FIG.9A for relaying the wireless control commands received from the video interphone monitor 100 or from the shopping terminal 200 to different locations within the house. Such RF relay station offers many advantages because it provides wide coverage in the house at low cost and with no wiring.

Similarly the IR relay station 1IR shown in FIG.9B provides for receiving IR commands from the video interphone monitor 100 or from the shopping terminal 200 directly through a visual path and relays the control command through another visual path or angle to a given appliance in the home or the apartment.

The IR relay station 1RF-IR shown in FIG.9C receives RF control commands from the video interphone 100 or the shopping terminal 200, converts the received indexed RF command to an IR coded command via the CPU 18B and generated IR remote control signals via the LEDs 19r. Shown in FIG.9C are three LEDs 19r, each transmits its IR signal into different direction. The driver 19R may therefore be equipped with several LEDs 19r for covering the whole surrounding area, or may incorporate one, two or a given number of LEDs 19r for covering a specific area or location, and/or for mounting on walls, poles, ceiling and the like, or such LEDs 19r may be provided with flexible direction adjustment, for adjusting the direction of the one or more employed LEDs.

By this a video interphone or a shopping terminal apparatus of the present invention does not need to be wired to a remote driver, but can be operated through a single wireless RF driver of the video interphone or the shopping terminal, such as the driver 19RF of FIG.1 and FIG.3 and the shown driver 221 in FIG.8 and by the IR driver 19R or 224 for feeding IR control signals to a relay station 1IR-RF shown in FIG.9D, for receiving IR control signal and regenerating RF control signal.

From the above explanation it becomes clear that a video interphone monitor 100 and a shopping terminal 200 shown in FIG.7 and FIG.8 can be used for propagating wireless or wired remote control commands for operating appliances within the homes, apartments and buildings.

The remote controlling of the appliances can be made simple and/or programmed to the individual homeowner preferences. For example, the homeowner can create a command to open the parking barrier by a single button, even though the remote control device for the parking barrier calls for keying a password, referred to above.

The most convenient way to operate the appliances of the home or the apartment is to provide touch screen displays such as the touch screen 144A shown in FIG.10, for each appliances or group of appliances, such as displaying touch screen menu under the heading AIR CONDITION, with sub menus listing the individual rooms or zones inside the home, with each room or zone includes ON-OFF icons, cold-hot icons, fan-high fan-low icons and temperature up-down adjust icons.

Similar menus for A/V or curtains or lighting control, with rooms or zones displayed on the monitor screen include icons for audio or video channel select, volume up-down, lights on-off and light dimming up-down, and/or such icons as for programmed preset of BGM (back ground music) in given zones or rooms, including lights and air condition all to be recalled via a single preset icons. It is similarly possible to provide several preset recall icons for morning, day, evening and night time, enabling the home owner to set all its appliances, lights, air condition, activate the alarm and etc, via a single touch of a preset icon, displayed on the monitor screen of his video interphone or shopping terminal apparatus of the present invention.

By programming the CPU 118 of the video interphone 100 or the CPU 252 of the shopping terminal 200 to compare a freshly received remote control signal with the recorded and indexed codes, it is possible to use the original remote control device 11 or 13 for operating the appliances through the video interphones or the shopping terminals. This enables the user, for example, to shut down the air condition in the living room from the master bedroom through the video interphone 100, by using the original IR remote control device of the air condition unit.

Such programming provide for the indexed recording of the counting details of said unknown coded envelope, to be compared with the receiving, decoding and counting of the envelope of a repeat fresh transmission, generated by said remote control device 11 or 13, for remotely controlling of a selected appliance. Wherein once the newly received, decoded and counted envelope is compared with the stored values of said unknown coded envelope and when both values, the freshly counted values and the stored values match, the CPU 18 of FIG.1 and 18A of FIG.3 will regenerate the remote control command through the drive circuit 19R, 19RF, 19D or 19N to the corresponding appliance as indexed and recorded in the memory 17S.

Similarly, it is possible to use, for example a proximity key, to activate the drive circuits 19D or 19N, which may include a relay or other hard wire driver circuit, such as open collector, for opening doors or for opening or closing motorized curtains, or for raising parking barrier and/or activating a buffer circuit for feeding serial or parallel codes, known as protocols, for recalling or providing an access to a selected elevator in the lobby or to any selected floor and/or for disarming the alarm system and/or the emergency system and/or for illuminating the entrance lobby of a building.

The recording process of the unknown coded remote control signals into the video interphone 100 and the shopping terminal 200 can be made simple and easy. It can combine steps for verifying the recording, such as, by repeat checking of each and every remote control command and for assigning the icons to a given remote control device 11, and to its operated appliance, in any of the rooms or the zones of the home, apartment or building. The recording is processed with the remote control device 11 or 13 is operated against the video interphone 180 or the shopping terminal 200.

A substantial advantage is the ability to operating the RF remote control device 11 at a close range or visually directing the IR remote control device 13 toward the video interphone 100 or the shopping terminal 200 from a short distance, ensuring that a high signal level with low noise is received by the RF 11R or IR 13S receivers.

Shown in FIG. 10 the touch screen 244A is programmed with different touch keys, for operating variety of appliances, such as home theater, A/V appliances, BGM, air condition, lighting, alarm, kitchen and laundry appliances, garden appliances, and other electrical appliances. It is preferable and practical to provide basic operating keys, too many touch icons or select keys 255 may unnecessarily complicate the controlling of the home automation, however the program can provide for any number of keys or icons for user preference and selection.

It is necessary and practical to provide keys or touch keys (icons) for switching the appliance on and off, dim the light to a given level, control the temperature and the fan of the air conditioners, select a channel of the A/V or home theater and set the volume. It is also practical to control the F.F, rewind, record, play back of audio and/or video recorder. Similarly it is advantageous to program a preset recall of whole functions, involving more than one appliance at a single touch of key. Another programming is the auto recall of appliances operating mode, such as recalling elevator to a preselected floor, releasing the user from going through the process of selecting the elevator and the floor each time he access the building, or such as switching on preselected lights when the main door to the home is opened.

With the recording of all needed key functions for each appliance in the home completed, it is possible to load the entire program or portion of the program into any or all of the relay stations such as the 1RF, 1IR, 1RF-IR and 1IR-RF and drivers, using wireless or wired connections for transmitting the entire program from the CPU through any of the drivers 19R, 19RF, 19D and 19N. Similarly it is possible to load the program or portion of it to a plurality of video interphones 100 or shopping terminals 200 that are installed a given home or apartment.

With the remote control key functions recorded, it is not necessary to retransmit the entire recorded unknown code between the video interphone or the shopping terminal and the relay station. The transmitting of the index code is sufficient, because the relay station is transmitting to the appliance the remote control signal in accordance with the stored command on the basis of the received index code.

Because the remote control signals, wireless or wired are fed by the video interphone 100 or the shopping terminal 200 apparatus, on the basis of the recorded unknown remote control code's envelopes, which are all indexed and are retrieved through the operating keys 155 or the touch screen 144A of FIG.8 it becomes clear that the use of the video interphone 100 or the shopping terminal 200 can efficiently provide for operating remotely the appliances within homes, apartments or buildings.

Moreover, because the unknown remote control codes are recorded, stored and indexed into the memories of the video interphone 100, the shopping terminal 200 and the relay stations 1RF, 11R, 1RF-IR and 1IR-RF the remote controlling of appliances can be propagated to anywhere within the home, apartment or the building at low cost and efficiently..

## Claims

1. A method for recalling indexed codes stored in a memory (17S) (253) of a control station (1) (100) (200) via a recall selected from a group comprising an automation program, operating keys (234A) (244A) of said control station, associated keys (11K)(13K) of at least one remote control device (11)(13)(16) and combinations thereof for operating at least one specific function of at least one given appliance of a plurality of remote controlled appliances within a building through at least one driver of a plurality of drivers (19D) (19RF) (19R) (19N);
said control station is selected from the group comprising a video interphone (100), a shopping terminal (200), a home control and combinations thereof, said building is selected from a group comprising a building, a house, a home, an apartment and combinations thereof, said indexed codes are a sequence of codes comprising codes of said building, codes of said at least one given appliance, codes of a location of said given appliance, codes directing said at least one driver and one of a single command data and a sequence of commands for operating one of said specific function and a sequence of specific functions;
said recalling of one said indexed code is initiating the regeneration of an indexed remote control signal via said driver (19R) (19RF) (19D) (19N) to said at least one given appliance, said control station further comprising at least one input of a plurality of receivers and inputs (11A) (12A) (13S) (14R) (15) and a central processing unit (18) (118) (252) for receiving and processing said recall, said method comprising the steps of:
creating said building data including said drivers, said appliances, each said appliance type and its location within said building;
feeding said remote control signal used for each of a selected function for each of said plurality of remote controlled appliances, including said remote control signal for operating said at least one specific function of said at least one given appliance to said input;
filtering each received said remote control signal for feeding its envelope to said central processing unit;
creating said command data pertaining to each said selected function including at least said single command data by said central processing unit processing each said envelope:
cascading said building data with said command data and indexing each cascaded data into uniquely indexed codes stored in said memory;
assigning said recall of each said indexed codes to said automation program and to at least one key of said keys; and activating at least one of said automation program and said key for said recalling of a given indexed code for reproducing and propagating said remote control signal via said at least one driver for operating said specific function of said at least one given appliance in said location.

2. The method for recalling indexed codes according to claim 1, wherein said operating keys (234A)(244A) are forming an integral part of said control station and said associated keys (16) (11K) (13K) communicate with said control station via a medium selected from the group comprising , wireless RF, IR in line of sight, a wired communication lines, data network and combinations thereof.

3. The method for recalling indexed codes according to any of the claims 1 and 2, wherein said keys are selected from the group comprising a touch key, a push key, a proximity key, an RFID device, a reader, a touch screen icon, a touch screen menu and combinations thereof.

4. The method for recalling indexed codes according to any of the claims 1 to 3, wherein said input is selected from the group comprising an RF receiver (12R), an IR receiver (11R), a wired receiver (216A), a data receiver (15) and combinations thereof and said driver is a circuit selected from the group comprising a relay contact, an open collector, an electric switch, a serial code buffer, a parallel code buffer, an RF transmitter, an IR transmitter, and combinations thereof.

5. The method for recalling indexed codes according to any of the claims 1 to 4, wherein said appliance is selected from the group comprising an alarm controller, an alarm device, an emergency controller, an emergency device, a light fixture, a television set, an audio-video equipment, an audio recorder, a video recorder, an audio player, a video player, an home theater equipment, a radio, back ground music system, back ground music devices, an elevator, a curtain, a blind, a shade, a lock, a cooking device, a cooking equipment, a washer, a dish washer, a dryer, a gardening device, a gardening equipment, an electrical watering system, a water heater, a bath warmer, an air conditioner, an air pollution cleaner, a room heater, an heating system, a room cooler, a cooling system and combinations thereof.

6. The method for recalling indexed codes according to any of the claims 1 to 5, wherein said processing is selected from the group comprising detecting frequency, detecting rise time, detecting fall time, detecting time duration, detecting pulse width, detecting pulse level, detecting interval width, pulses counting, intervals counting, defining pulses state, defining intervals state, resetting and combinations thereof.

7. The method for recalling indexed codes according to any of the claims 1 to 6, wherein said command data is a sequence of codes and a single activation of one of said automation program and said key recalls said sequence of said remote control signals.

8. The method for recalling indexed codes according to claim 7, wherein said single activation recalls a sequence of a repeated said remote control signal for said specific function.

9. The method for recalling indexed codes according to any of the claims 4 to 8, wherein said RF receiver demodulates the frequency of a received RF signal and said IR receiver demodulates the clock frequency of a received IR signal.

10. The method for recalling indexed codes according to any of the claims 4 to 9, wherein the frequency of said RF transmitter is controlled by said RF receiver.

11. The method for recalling indexed codes according to any of the claims 1 to 10, wherein each said driver selected from the group comprising a relay contact, an open collector and an electric switch is directly connectable to said specific appliance via a wired circuit.

12. The method for recalling indexed codes according to any of the claims 1 to 11, wherein said driver is selected from the group comprising a serial code buffer, a parallel code buffer, an RF transmitter, an IR transmitter, a data buffer and combinations thereof for propagating one of said remote control signal and said recalling via at least one of a communication lines and a remote relay station.

13. The method for recalling indexed codes according to any of the claims 1 to 12, wherein said codes and data items selected from the group comprising said program, said indexing, said uniquely indexed, said assigning, said indexed codes, said building data, said command data and combinations thereof are propagated between said control station and associated devices selected from a group comprising said reader, said RFID, said proximity key, said keys, said IR remote control unit, said RF remote control unit, said driver, said relay station and combinations thereof including a fresh said processing, said storing, said indexing and combinations thereof through at least one of said input and said driver.

14. The method for recalling indexed codes according to any of the claims 1 to 13, wherein said driver propagates said remote control signal to at least one relay station including a conversion circuit selected from the group comprising a serial code to a relay contact station, a serial code to an electric switch station, a serial code to an RF transmitter station, a serial code to an IR transmitter station, a parallel code to a relay contact station, a parallel code to an electric switch station, a parallel code to an RF transmitter station, a parallel code to an IR transmitter station, an RF receiver to a relay contact station, an RF receiver to an electric switch station, an RF receiver to an RF transmitter station, an RF receiver to an IR transmitter station, an IR receiver to a relay contact station, an IR receiver to an electric switch station, an IR receiver to an IR transmitter station, an IR receiver to an RF transmitter station and combinations thereof.

15. The method for recalling indexed codes according to any of the claims 1 to 14, wherein said codes and data propagated via said at least one driver are extendable via at least one of a wireless relay stations and via said wired communication lines.

16. The method for recalling indexed codes according to any of the claims 1 to 15, wherein at least one of said indexed codes comprising said building data pertaining to a plurality of appliances in at least one of said location and throughout said building and said command data comprising at least one remote control signal for operating a function of said plurality of appliances and wherein said activation of said one of automation and said key propagates a reproduced remote control signal to said plurality of appliances in said at least one location and throughout said building.

17. An apparatus for recalling indexed codes stored in a memory (17S)(253) of a control station (1) (100) (200) via a recall selected from a group comprising an automation program, operating keys (234A)(244A) of said controller, associated keys (11K) (13K) of at least one remote control unit (11) (13) (16) and combinations thereof for operating at least one specific function of at least one given appliance of a plurality of remote controlled appliances within a building through at least one driver of a plurality of drivers (19D) (19RF) (19R) (19N);
said control station is selected from the group comprising a video interphone (100), a shopping terminal (200), a home control and combinations thereof, said building is selected from a group comprising a building, a house, a home, an apartment and combinations thereof, said indexed codes are a sequence of codes comprising codes of said building, codes of said at least one given appliance, codes of a location of said given appliance, codes directing said at least one driver and one of a single command data and a sequence of commands for operating one of said specific function and a sequence of specific functions;
said recalling of one said indexed code is initiating the regeneration of an indexed remote control signal via said driver (19R) (19RF) (19D) (19N) to said at least one given appliance, said control station further comprising at least one input of a plurality of inputs (11A) (12A) 13S)(14R) (15) for receiving and filtering said remote control signal for outputting an envelope of each received said remote control signal to a central processing unit (18) (118) (252);
said central processing unit creates a building data including said drivers, said appliances, each said appliance type and its location within said building, and said command data of each specific function of each said given appliance by processing each said envelope and uniquely cascade each said command data with said building data;
said automation program and at least one key of said keys are assigned with said recalling of a given indexed code by activating one of said automation program and said key for propagating said reproduction of said remote control signal via said at least one driver to said at least one given appliance in said location.

18. The apparatus for recalling indexed codes according to claim 17, wherein said operating keys (234A) (244A) are forming an integral part of said control station and said associated keys (16) (11K) (13K) communicate with said controller via a medium selected from the group comprising wireless RF, IR in line of sight, a wired communication line, a data network and combinations thereof.

19. The apparatus for recalling indexed codes according to any of the claims 17 to 18, wherein said keys are selected from the group comprising a touch key, a push key, a proximity key, an RFID device, a reader, a touch screen icon, a touch screen menu and combinations thereof.

20. The apparatus for recalling indexed codes according to any of the claims 17 to 19, wherein said input is selected from the group comprising an RF receiver (12R), an IR receiver (11R), a wired receiver (216A), a data receiver (15) and combinations thereof and said driver is a circuit selected from the group comprising of a relay contact, an open collector, an electric switch, a serial code buffer, a parallel code buffer, an RF transmitter, an IR transmitter and combinations thereof.

21. The apparatus for recalling indexed codes according to any of the claims 17 to 20, wherein said appliance is selected from the group comprising an alarm controller, an alarm device, an emergency controller, an emergency device, a light fixture, a television set, an audio-video equipment, an audio recorder, a video recorder, an audio player, a video player, an home theater equipment, a radio, back ground music system, back ground music devices, an elevator, a curtain, a blind, a shade, a lock, a cooking device, a cooking equipment, a washer, a dish washer, a dryer, a gardening device, a gardening equipment, an electrical watering system, a water heater, a bath warmer, an air conditioner, an air pollution cleaner, a room heater, an heating system, a room cooler, a cooling system and combinations thereof.

22. The apparatus for recalling indexed codes according to any of the claims 17 to 21, wherein said processing is selected from the group comprising detecting frequency, detecting rise time, detecting fall time, detecting time duration, detecting pulse width, detecting pulse level, detecting interval width, pulses counting, intervals counting, defining pulses state, defining intervals state, resetting and combinations thereof.

23. The apparatus for recalling indexed codes according to any of the claims 17 to 22, wherein said command data is a sequence of commands and a single activation of one of said automation program and said keys recalls said sequence of said remote control signals.

24. The apparatus for recalling indexed codes according to claim 23, wherein said single activation recalls a sequence of a repeated said remote control signal for said specific function.

25. The apparatus for recalling indexed codes according to any of the claims 20 to 24, wherein said RF receiver demodulates the frequency of a received RF signal and said IR receiver demodulates the clock frequency of a received IR signal.

26. The apparatus for recalling indexed codes according to any of the claims 20 to 25, wherein the frequency of said RF transmitter is controlled by said RF receiver.

27. The apparatus for recalling indexed codes according to any of the claims 17 to 26, wherein each said driver selected from the group comprising a relay contact, an open collector and an electric switch is directly connectable to said specific appliance via a wired circuit.

28. The apparatus for recalling indexed codes according to any of the claims 17 to 27, wherein said driver is selected from the group comprising a serial code buffer, a parallel code buffer, an RF transmitter, an IR transmitter, data buffer, and combinations thereof for propagating one of said remote control signal and said recalling via at least one of a communication lines and a remote relay station.

29. The apparatus for recalling indexed codes according to any of the claims 17 to 28, wherein said codes and data items selected from the group comprising said program, said indexing, said uniquely cascading, said assigning, said indexed codes, said building data, said command data and combinations thereof are propagated between said control station and associated devices selected from a group comprising said reader, said RFID, said proximity key, said keys, said IR remote control unit, said RF remote control unit, said driver, said relay station and combinations thereof including a fresh said processing, said storing, said indexing and combinations thereof through at least one of said input and said driver.

30. The apparatus for recalling indexed codes according to any of the claims 17 to 29, wherein said driver propagates said remote control signal to at least one relay station including a conversion circuit selected from the group comprising a serial code to a relay contact station, a serial code to an electric switch station, a serial code to an RF transmitter station, a serial code to an IR transmitter station, a parallel code to a relay contact station, a parallel code to an electric switch station, a parallel code to an RF transmitter station, a parallel code to an IR transmitter station, an RF receiver to a relay contact station, an RF receiver to an electric switch station, an RF receiver to an RF transmitter station, an RF receiver to an IR transmitter station, an IR receiver to a relay contact station, an IR receiver to an electric switch station, an IR receiver to an IR transmitter station, an IR receiver to an RF transmitter station and combinations thereof.

31. The apparatus for recalling indexed codes according to any of the claims 17 to 30, wherein said codes and data propagated via at least one said driver are extendable via at least one of a wireless relay station and said wired communication lines.

32. The apparatus for recalling indexed codes according to any of the claims 17 to 31, wherein at least one of said indexed codes comprising said building data pertaining to a plurality of appliances in at least one of said location and throughout said building and said command data comprising at least one remote control signal for operating a function of said plurality of appliances and wherein said activation of said one of automation and said key propagates a reproduced remote control signal to said plurality of appliances in said at least one location and throughout said building.

## Patentansprüche

1. Verfahren zum Abrufen von indizierten Codes, die in einem Speicher (17S) (253) einer Steuerstation (1) (100) (200) gespeichert sind, über einen Abruf, der aus einer Gruppe ausgewählt wird, die ein Automatisierungsprogramm, Bedientasten (234A) (244A) der Steuerstation, zugehörige Tasten (11K) (13K) wenigstens einer Fernsteuervorrichtung (11) (13) (16) und Kombinationen davon aufweist, um wenigstens eine spezifische Funktion wenigstens eines gegebenen Geräts von mehreren ferngesteuerten Geräten innerhalb eines Gebäudes durch wenigstens einen von mehreren Treibern (19D) (19RF) (19R) (19N) zu betreiben;
die Steuerstation ist aus der Gruppe ausgewählt, die eine Videosprechanlage (100), ein Einkaufsterminal (200), eine Heimsteuerung und Kombinationen davon aufweist, das Gebäude ist aus einer Gruppe ausgewählt, die ein Gebäude, ein Haus, ein Heim, eine Wohnung und Kombinationen davon aufweist, die indizierten Codes sind eine Folge von Codes, die Codes des Gebäudes, Codes des wenigstens einen gegebenen Geräts, Codes eines Standorts des gegebenen Geräts, Codes, die den wenigstens einen Treiber steuern, und einen einzelnen Befehlsdatensatz oder eine Folge von Befehlen zum Betreiben der spezifischen Funktion oder einer Folge spezifischer Funktionen aufweisen;
das Abrufen eines solchen indizierten Codes löst die Neubildung eines indizierten Fernsteuersignals über den Treiber (19R) (19RF) (19D) (19N) an das wenigstens eine gegebene Gerät aus, wobei die Steuerstation ferner wenigstens einen Eingang von mehreren Empfängern und Eingängen (11A) (12A) (13S) (14R) (15) und eine zentrale Verarbeitungseinheit (18) (118) (252) zum Empfangen und Verarbeiten des Abrufs aufweist, wobei das Verfahren die folgenden Schritte aufweist:
Erzeugen der Gebäudedaten, welche die Treiber, die Geräte, jeden Gerätetyp und seinen Standort in dem Gebäude aufweisen;
Einspeisen des Fernsteuersignals, das für jede ausgewählte Funktion für jedes der mehreren ferngesteuerten Geräte verwendet wird, inklusive des Fernsteuersignals zum Betreiben der wenigstens einen spezifischen Funktion des wenigstens einen gegebenen Geräts, in den Eingang;
Filtern jedes empfangenen Fernsteuersignals, um seine Einhüllende in die zentrale Verarbeitungseinheit einzuspeisen;
Erzeugen der Befehlsdaten, die zu jeder ausgewählten Funktion gehören, einschließlich wenigstens des einzelnen Befehlsdatensatzes durch die zentrale Verarbeitungseinheit, die jede Einhüllende verarbeitet:
Kaskadieren der Gebäudedaten mit den Befehlsdaten und Indizieren jedes kaskadierten Datensatzes in eindeutig indizierten Codes, die in dem Speicher gespeichert werden;
Zuweisen des Abrufs jedes der indizierten Codes an das Automatisierungsprogramm und an wenigstens eine Taste der genannten Tasten; und
Aktivieren des Automatisierungsprogramms und/oder der Taste für das Abrufen eines gegebenen indizierten Codes für die Wiedergabe und Verbreitung des Fernsteuersignals über den wenigstens einen Treiber zum Betreiben der spezifischen Funktion des wenigstens einen gegebenen Geräts an dem Standort.

2. Verfahren zum Abrufen indizierter Codes nach Anspruch 1, wobei die Bedientasten (234A) (244A) einen integralen Teil der Steuerstation bilden und die zugehörigen Tasten (16) (11K) (13K) mit der Steuerstation über ein Medium kommunizieren, das aus der Gruppe ausgewählt ist, die drahtlose Frequenz, Infrarot in Sichtverbindung, einen verdrahtete Kommunikationsweg, ein Datennetzwerk und Kombinationen davon aufweist.

3. Verfahren zum Abrufen indizierter Codes nach einem der Ansprüche 1 oder 2, wobei die Tasten aus der Gruppe ausgewählt sind, die eine Berührungstaste, eine Drucktaste, eine Näherungstaste, eine RFID-Vorrichtung, eine Leseeinrichtung, ein Symbol auf einem Berührungsbildschirm, ein Menü auf einem Berührungsbildschirm und Kombinationen davon aufweist.

4. Verfahren zum Abrufen indizierter Codes nach einem der Ansprüche 1 bis 3, wobei der Eingang aus der Gruppe ausgewählt ist, die einen Funkfrequenzempfänger (12R), einen Infrarotempfänger (11R), einen verdrahteten Empfänger (216A), einen Datenempfänger (15) und Kombinationen davon aufweist, und wobei der Treiber eine Schaltung ist, die aus der Gruppe ausgewählt ist, die einen Relaiskontakt, einen offenen Kollektor, einen elektrischen Schalter, einen seriellen Codepuffer, einen parallelen Codepuffer, einen Funkfrequenzsender einen Infrarotsender und Kombinationen davon aufweist.

5. Verfahren zum Abrufen indizierter Codes nach einem der Ansprüche 1 bis 4, wobei das Gerät aus der Gruppe ausgewählt ist, die eine Alarmsteuerung, eine Alarmvorrichtung, eine Notfallsteuerung, eine Notfallvorrichtung, einen Leuchtkörper, einen Fernsehapparat, eine Audio-Video-Anlage, einen Audiorekorder, einen Videorekorder, ein Audioabspielgerät, ein Videoabspielgerät, eine Heimkinoanlage, ein Radio, ein Hintergrundmusiksystem, Hintergrundmusikvorrichtungen, einen Aufzug, einen Vorhang, eine Jalousie, einen Lichtschutz, ein Schloss, eine Kochvorrichtung, eine Kochausstattung, eine Waschmaschine, eine Spülmaschine, einen Trockner, ein Gartengerät, eine Gartenausstattung, ein elektrisches Bewässerungssystem, einen Warmwasserbereiter, einen Badwärmer, eine Klimaanlage, einen Luftverschmutzungsreiniger, eine Raumheizung, ein Heizsystem, einen Raumkühler, ein Kühlsystem und Kombinationen davon aufweist.

6. Verfahren zum Abrufen indizierter Codes nach einem der Ansprüche 1 bis 5, wobei die Verarbeitung aus der Gruppe ausgewählt ist, die das Erfassen der Frequenz, das Erfassen der Anstiegszeit, das Erfassen der Abfallzeit, das Erfassen der Zeitdauer, das Erfassen der Impulsbreite, das Erfassen des Impulspegels, das Erfassen einer Intervallbreite, Impulszählen, Intervallzählen, das Definieren des Impulszustands, das Definieren des Intervallzustands, das Zurücksetzen und Kombinationen davon aufweist.

7. Verfahren zum Abrufen indizierter Codes nach einem der Ansprüche 1 bis 6, wobei die Befehlsdaten eine Folge von Codes sind und eine einzelne Aktivierung des Automatisierungsprogramms oder der Taste die Folge der Fernsteuersignale abruft.

8. Verfahren zum Abrufen indizierter Codes nach Anspruch 7, wobei die einzelne Aktivierung eine Folge eines wiederholten solchen Fernsteuersignals für die spezifische Funktion abruft.

9. Verfahren zum Abrufen indizierter Codes nach einem der Ansprüche 4 bis 8, wobei der Funkfrequenzempfänger die Frequenz eines empfangen Funkfrequenzsignals demoduliert und der Infrarotempfänger die Taktfrequenz eines empfangenen Infrarotsignals demoduliert.

10. Verfahren zum Abrufen indizierter Codes nach einem der Ansprüche 4 bis 9, wobei die Frequenz des Funkfrequenzsenders durch den Funkfrequenzempfänger gesteuert wird.

11. Verfahren zum Abrufen indizierter Codes nach einem der Ansprüche 1 bis 10, wobei jeder genannte Treiber, der aus der Gruppe ausgewählt ist, die einen Relaiskontakt, einen offenen Kollektor und einen elektrischen Schalter aufweist, über eine verdrahtete Schaltung direkt mit dem spezifischen Gerät verbindbar ist.

12. Verfahren zum Abrufen indizierter Codes nach einem der Ansprüche 1 bis 11, wobei der Treiber aus der Gruppe ausgewählt ist, die einen seriellen Codepuffer, einen parallelen Codepuffer, einen Funkfrequenzsender, einen Infrarotsender, einen Datenpuffer und Kombinationen davon aufweist, um das Fernsteuersignal oder den Abruf über einen Kommunikationsweg und/oder eine entfernte Relaisstation zu verbreiten.

13. Verfahren zum Abrufen indizierter Codes nach einem der Ansprüche 1 bis 12, wobei die Codes und Datenelemente, die aus der Gruppe ausgewählt sind, die das Programm, die Indizierung, die eindeutige Indizierung, die Zuweisung, die indizierten Codes, die Gebäudedaten, die Befehlsdaten und Kombinationen davon aufweist, zwischen der Steuerstation und zugehörigen Vorrichtungen verbreitet werden, die aus der Gruppe auswählt sind, die die Lesevorrichtung, die RFID, die Näherungstaste, die Tasten, die Infrarotfernsteuereinheit, die Funkfrequenzfernsteuereinheit, den Treiber, die Relaisstation und Kombinationen davon aufweist, was eine frische solche Verarbeitung, das Speichern, das Indizieren und Kombinationen davon durch den Eingang und/oder den Treiber beinhaltet.

14. Verfahren zum Abrufen indizierter Codes nach einem der Ansprüche 1 bis 13, wobei der Treiber das Fernsteuersignal an wenigstens eine Relaisstation mit einer Wandlerschaltung verbreitet, die aus der Gruppe ausgewählt ist, die einen seriellen Code zu einer Relaiskontaktstation, einen seriellen Code zu einer elektrischen Schaltstation, einen seriellen Code zu einer Funkfrequenzsenderstation, einen seriellen Code zu einer Infrarotsenderstation, einen parallelen Code zu einer Relaiskontaktstation, einen parallelen Code zu einer elektrischen Schaltstation, einen parallelen Code zu einer Funkfrequenzsenderstation, einen parallelen Code zu einer Infrarotsenderstation, einen Funkfrequenzempfänger zu einer Relaiskontaktstation, einen Funkfrequenzempfänger zu einer elektrischen Schaltstation, einen Funkfrequenzempfänger zu einer Funkfrequenzsenderstation, einen Funkfrequenzempfänger zu einer Infrarotsenderstation, einen Infrarotempfänger zu einer Relaiskontaktstation, einen Infrarotempfänger zu einer elektrischen Schaltstation, einen Infrarotempfänger zu einer Infrarotsenderstation, einen Infrarotempfänger zu einer Funkfrequenzsenderstation und Kombinationen davon aufweist.

15. Verfahren zum Abrufen indizierter Codes nach einem der Ansprüche 1 bis 14, wobei die Codes und Daten, die über den wenigstens einen Treiber verbreitet werden, über eine drahtlose Relaisstation und/oder die verdrahteten Kommunikationswege ausdehnbar sind.

16. Verfahren zum Abrufen indizierter Codes nach einem der Ansprüche 1 bis 15, wobei die indizierten Codes, die Gebäudedaten, die zu mehreren Geräten an wenigstens einem Standort und/oder im ganzen Gebäude gehören, aufweisen, und/oder die Befehlsdaten wenigstens ein Fernsteuersignal zum Betreiben einer Funktion der mehreren Geräte aufweisen, und wobei die Aktivierung der Automatisierung oder der Taste ein wiedergegebenes Fernsteuersignal an die mehreren Geräte an dem wenigstens einen Standort und in dem ganzen Gebäude verbreiten.

17. Vorrichtung zum Abrufen von indizierten Codes, die in einem Speicher (17S) (253) einer Steuerstation (1) (100) (200) gespeichert sind, über einen Abruf, der aus einer Gruppe ausgewählt ist, die ein Automatisierungsprogramm, Bedientasten (234A) (244A) der Steuerung, zugehörige Tasten (11K) (13K) wenigstens einer Fernsteuereinheit (11) (13) (16) und Kombinationen davon aufweist, um wenigstens eine spezifische Funktion wenigstens eines gegebenen Geräts von mehreren ferngesteuerten Geräten innerhalb eines Gebäudes durch wenigstens einen von mehreren Treibern (19D) (19RF) (19R) (19N) zu betreiben;
die Steuerstation ist aus der Gruppe ausgewählt, die eine Videosprechanlage (100), ein Einkaufsterminal (200), eine Heimsteuerung und Kombinationen davon aufweist, das Gebäude ist aus einer Gruppe ausgewählt, die ein Gebäude, ein Haus, ein Heim, eine Wohnung und Kombinationen davon aufweist, die indizierten Codes sind eine Folge von Codes, die Codes des Gebäudes, Codes des wenigstens einen gegebenen Geräts, Codes eines Standorts des gegebenen Geräts, Codes, die den wenigstens einen Treiber steuern, und einen einzelnen Befehlsdatensatz oder eine Folge von Befehlen zum Betreiben der spezifischen Funktion oder einer Folge spezifischer Funktionen aufweisen;
das Abrufen eines solchen indizierten Codes löst die Neubildung eines indizierten Fernsteuersignals über den Treiber (19R) (19RF) (19D) (19N) an das wenigstens eine gegebene Gerät aus, wobei die Steuerstation ferner wenigstens einen von mehreren Eingängen (11A) (12A) (13S) (14R) (15) zum Empfangen und Filtern des Fernsteuersignals zum Ausgeben einer Einhüllenden jedes empfangen Fernsteuersignals an eine zentrale Verarbeitungseinheit (18) (118) (252) aufweist;
die zentrale Verarbeitungseinheit erzeugt einen Gebäudedatensatz, welcher die Treiber, die Geräte, jeden Gerätetyp und seinen Standort in dem Gebäude aufweist, und die Befehlsdaten jeder spezifischen Funktion jedes gegebenen Geräts, indem sie jede Einhüllende verarbeitet und jeden Befehlsdatensatz eindeutig mit den Gebäudedaten kaskadiert;
dem Automatisierungsprogramm und der wenigstens einen der Tasten ist das Abrufen eines gegebenen indizierten Codes durch Aktivieren des Automatisierungsprogramms oder der Taste für die Verbreitung der Wiedergabe des Fernsteuersignals über den wenigstens einen Treiber an das wenigstens eine gegebene Gerät an dem Standort zugewiesen.

18. Vorrichtung zum Abrufen indizierter Codes nach Anspruch 17, wobei die Bedientasten (234A) (244A) einen integralen Teil der Steuerstation bilden und die zugehörigen Tasten (16) (11K) (13K) mit der Steuerung über ein Medium kommunizieren, das aus der Gruppe ausgewählt ist, die drahtlose Funkfrequenz, Infrarot in Sichtverbindung, einen verdrahteten Kommunikationsweg, ein Datennetzwerk und Kombinationen davon aufweist.

19. Vorrichtung zum Abrufen indizierter Codes nach einem der Ansprüche 17 bis 18, wobei die Tasten aus der Gruppe ausgewählt sind, die eine Berührungstaste, eine Drucktaste, eine Näherungstaste, eine RFID-Vorrichtung, eine Leseeinrichtung, ein Symbol auf einem Berührungsbildschirm, ein Menü auf einem Berührungsbildschirm und Kombinationen davon aufweist.

20. Vorrichtung zum Abrufen indizierter Codes nach einem der Ansprüche 17 bis 19, wobei der Eingang aus der Gruppe ausgewählt ist, die einen Funkfrequenzempfänger (12R), einen Infrarotempfänger (11R), einen verdrahteten Empfänger (216A), einen Datenempfänger (15) und Kombinationen davon aufweist, und wobei der Treiber eine Schaltung ist, die aus der Gruppe ausgewählt ist, die einen Relaiskontakt, einen offenen Kollektor, einen elektrischen Schalter, einen seriellen Codepuffer, einen parallelen Codepuffer, einen Funkfrequenzsender, einen Infrarotsender und Kombinationen davon aufweist.

21. Vorrichtung zum Abrufen indizierter Codes nach einem der Ansprüche 17 bis 20, wobei das Gerät aus der Gruppe ausgewählt ist, die eine Alarmsteuerung, eine Alarmvorrichtung, eine Notfallsteuerung, eine Notfallvorrichtung, einen Leuchtkörper, einen Fernsehapparat, eine Audio-Video-Anlage, einen Audiorekorder, einen Videorekorder, ein Audioabspielgerät, ein Videoabspielgerät, eine Heimkinoanlage, ein Radio, ein Hintergrundmusiksystem, Hintergrundmusikvorrichtungen, einen Aufzug, einen Vorhang, eine Jalousie, einen Lichtschutz, ein Schloss, eine Kochvorrichtung, eine Kochausstattung, eine Waschmaschine, eine Spülmaschine, einen Trockner, ein Gartengerät, eine Gartenausstattung, ein elektrisches Bewässerungssystem, einen Warmwasserbereiter, einen Badwärmer, eine Klimaanlage, einen Luftverschmutzungsreiniger, eine Raumheizung, ein Heizsystem, einen Raumkühler, ein Kühlsystem und Kombinationen davon aufweist.

22. Vorrichtung zum Abrufen indizierter Codes nach einem der Ansprüche 17 bis 21, wobei die Verarbeitung aus der Gruppe ausgewählt ist, die das Erfassen der Frequenz, das Erfassen der Anstiegszeit, das Erfassen der Abfallzeit, das Erfassen der Zeitdauer, das Erfassen der Impulsbreite, das Erfassen des Impulspegels, das Erfassen einer Intervallbreite, Impulszählen, Intervallzählen, das Definieren des Impulszustands, das Definieren des Intervallzustands, das Zurücksetzen und Kombinationen davon aufweist.

23. Vorrichtung zum Abrufen indizierter Codes nach einem der Ansprüche 17 bis 22, wobei die Befehlsdaten eine Folge von Befehlen sind und eine einzelne Aktivierung des Automatisierungsprogramms oder der Tasten die Folge der Fernsteuersignale abruft.

24. Vorrichtung zum Abrufen indizierter Codes nach Anspruch 23, wobei die einzelne Aktivierung eine Folge eines wiederholten solchen Fernsteuersignals für die spezifische Funktion abruft.

25. Vorrichtung zum Abrufen indizierter Codes nach einem der Ansprüche 20 bis 24, wobei der Funkfrequenzempfänger die Frequenz eines empfangen Funkfrequenzsignals demoduliert und der Infrarotempfänger die Taktfrequenz eines empfangenen Infrarotsignals demoduliert.

26. Vorrichtung zum Abrufen indizierter Codes nach einem der Ansprüche 20 bis 25, wobei die Frequenz des Funkfrequenzsenders durch den Funkfrequenzempfänger gesteuert wird.

27. Vorrichtung zum Abrufen indizierter Codes nach einem der Ansprüche 17 bis 26, wobei jeder der Treiber, der aus der Gruppe ausgewählt ist, die einen Relaiskontakt, einen offenen Kollektor und einen elektrischen Schalter aufweist, über eine verdrahtete Schaltung direkt mit dem spezifischen Gerät verbindbar ist.

28. Vorrichtung zum Abrufen indizierter Codes nach einem der Ansprüche 17 bis 27, wobei der Treiber aus der Gruppe ausgewählt ist, die einen seriellen Codepuffer, einen parallelen Codepuffer, einen Funkfrequenzsender, einen Infrarotsender, einen Datenpuffer und Kombinationen davon aufweist, um das Fernsteuersignal oder den Abruf über einen der Kommunikationswege und/oder eine entfernte Relaisstation zu verbreiten.

29. Vorrichtung zum Abrufen indizierter Codes nach einem der Ansprüche 17 bis 28, wobei die Codes und Datenelemente, die aus der Gruppe ausgewählt sind, die das Programm, die Indizierung, die eindeutige Kaskadierung, die Zuweisung, die indizierten Codes, die Gebäudedaten, die Befehlsdaten und Kombinationen davon aufweist, zwischen der Steuerstation und zugehörigen Vorrichtungen verbreitet werden, die aus einer Gruppe ausgewählt sind, die die Leseeinrichtung, die RFID, die Näherungstaste, die Tasten, die Infrarotfernsteuereinheit, die Funkfrequenzfernsteuereinheit, den Treiber, die Relaisstation und Kombinationen davon aufweist, was eine frische Verarbeitung, das Speichern, das Indizieren und Kombinationen davon durch einen Eingang und/oder den Treiber aufweist.

30. Vorrichtung zum Abrufen indizierter Codes nach einem der Ansprüche 17 bis 29, wobei der Treiber das Fernsteuersignal an wenigstens eine Relaisstation verbreitet, die eine Wandlerschaltung aufweist, die aus der Gruppe ausgewählt ist, die einen seriellen Code zu einer Relaiskontaktstation, einen seriellen Code zu einer elektrischen Schaltstation, einen seriellen Code zu einer Funkfrequenzsenderstation, einen seriellen Code zu einer Infrarotsenderstation, einen parallelen Code zu einer Relaiskontaktstation, einen parallelen Code zu einer elektrischen Schaltstation, einen parallelen Code zu einer Funkfrequenzsenderstation, einen parallelen Code zu einer Infrarotsenderstation, einen Funkfrequenzempfänger zu einer Relaiskontaktstation, einen Funkfrequenzempfänger zu einer elektrischen Schaltstation, einen Funkfrequenzempfänger zu einer Funkfrequenzsenderstation, einen Funkfrequenzempfänger zu einer Infrarotsenderstation, einen Infrarotempfänger zu einer Relaiskontaktstation, einen Infrarotempfänger zu einer elektrischen Schaltstation, einen Infrarotempfänger zu einer Infrarotsenderstation, einen Infrarotempfänger zu einer Funkfrequenzsenderstation und Kombinationen davon aufweist.

31. Vorrichtung zum Abrufen indizierter Codes nach einem der Ansprüche 17 bis 30, wobei die Codes und Daten, die über den wenigstens einen Treiber verbreitet werden, über eine drahtlose Relaisstation und/oder die verdrahteten Kommunikationswege ausdehnbar sind.

32. Vorrichtung zum Abrufen indizierter Codes nach einem der Ansprüche 17 bis 31, wobei die indizierten Codes, die Gebäudedaten, die zu mehreren Geräten an dem Standort und/oder in dem ganzen Gebäude gehören, aufweisen, und/oder die Befehlsdaten wenigstens ein Fernsteuersignal zum Betreiben einer Funktion der mehreren Geräte aufweisen, und wobei die Aktivierung der Automatisierung oder der Taste ein wiedergegebenes Fernsteuersignal an die mehreren Geräte an dem wenigstens einen Standort und in dem ganzen Gebäude verbreiten.

## Revendications

1. Procédé de rappel de codes indexés stockés dans une mémoire (17S) (253) d'une station de commande (1) (100) (200) par le biais d'un rappel sélectionné à partir d'un groupe comprenant un programme d'automatisation, des touches de commande (234A) (244A) de ladite station de commande, des touches associées (11K) (13K) d'au moins un dispositif de commande à distance (11) (13) (16), et leurs combinaisons, pour exploiter au moins une fonction spécifique d'au moins un appareil ménager donné d'une pluralité d'appareils ménagers commandés à distance dans un bâtiment, à travers au moins un pilote d'une pluralité de pilotes (19D) (19RF) (19R) (19N) ;
dans lequel ladite station de commande est sélectionnée à partir du groupe comprenant un visiophone (100), une borne d'achat (200), une commande domestique et leurs combinaisons, ledit bâtiment est sélectionné à partir d'un groupe comprenant un bâtiment, une maison, un domicile, un appartement et leurs combinaisons, lesdits codes indexés correspondent à une séquence de codes comprenant des codes dudit bâtiment, des codes dudit au moins un appareil ménager donné, des codes d'un emplacement dudit appareil ménager donné, des codes commandant ledit au moins un pilote et l'une parmi des données d'instruction uniques et une séquence d'instructions pour exploiter l'une parmi ladite fonction spécifique et une séquence de fonctions spécifiques ;
ledit rappel d'un dit code indexé initie la régénération d'un signal de commande à distance indexé, par l'intermédiaire dudit pilote (19R) (19RF) (19D) (19N), à destination dudit au moins un appareil ménager donné, ladite station de commande comprenant en outre au moins une entrée d'une pluralité de récepteurs et d'entrées (11A) (12A) (13S) (14R) (15) et une unité centrale de traitement (18) (118) (252) en vue de recevoir et de traiter ledit rappel, ledit procédé comprenant les étapes ci-dessous consistant à :
créer lesdites données de bâtiment en incluant lesdits pilotes, lesdits appareils ménagers, chaque dit type d'appareil ménager et son emplacement au sein dudit bâtiment ;
appliquer en entrée ledit signal de commande à distance utilisé pour chacune d'une fonction sélectionnée pour chacun de ladite pluralité d'appareils ménagers commandés à distance, y compris ledit signal de commande à distance pour exploiter ladite au moins une fonction spécifique dudit au moins un appareil ménager donné, au niveau de ladite entrée ;
filtrer chaque dit signal de commande à distance reçu en vue d'appliquer son enveloppe à destination de ladite unité centrale de traitement ;
créer lesdites données d'instruction connexes à chaque dite fonction sélectionnée, y compris au moins lesdites données d'instruction uniques, en amenant ladite unité centrale de traitement à traiter chaque dite enveloppe ;
cascader lesdites données de bâtiment avec lesdites données d'instruction et indexer chacune des données en cascade dans des codes indexés de manière unique stockés dans ladite mémoire ;
affecter ledit rappel de chacun desdits codes indexés audit programme d'automatisation et à au moins une touche desdites touches ; et
activer au moins l'un(e) parmi ledit programme d'automatisation et ladite touche pour ledit rappel d'un code indexé donné en vue de reproduire et de propager ledit signal de commande à distance par l'intermédiaire dudit au moins un pilote afin d'exploiter ladite fonction spécifique dudit au moins un appareil ménager donné dans ledit emplacement.

2. Procédé de rappel de codes indexés selon la revendication 1, dans lequel lesdites touches de commande (234A) (244A) font partie intégrante de ladite station de commande, et lesdites touches associées (16) (11K) (13K) communiquent avec ladite station de commande par l'intermédiaire d'un support sélectionné à partir du groupe comportant un support RF sans fil, un support IR en ligne de visée, une ligne de communication filaire, un réseau de données, et leurs combinaisons.

3. Procédé de rappel de codes indexés selon l'une quelconque des revendications 1 et 2, dans lequel lesdites touches sont sélectionnées à partir du groupe comprenant une touche tactile, un bouton-poussoir, une touche de proximité, un dispositif RFID, un lecteur, une icône d'écran tactile, un menu d'écran tactile, et leurs combinaisons.

4. Procédé de rappel de codes indexés selon l'une quelconque des revendications 1 à 3, dans laquelle ladite entrée est sélectionnée à partir du groupe comprenant un récepteur RF (12R), un récepteur IR (11R), un récepteur filaire (216A), un récepteur de données (15), et leurs combinaisons, et ledit pilote est un circuit sélectionné à partir du groupe comprenant un contact de relais, un collecteur ouvert, un interrupteur électrique, une mémoire tampon de codes sériels, une mémoire tampon de codes parallèles, un émetteur RF, un émetteur IR, et leurs combinaisons.

5. Procédé de rappel de codes indexés selon l'une quelconque des revendications 1 à 4, dans lequel ledit appareil ménager est sélectionné à partir du groupe comprenant un contrôleur d'alarme, un dispositif d'alarme, un contrôleur d'urgence, un dispositif d'urgence, un luminaire, un téléviseur, un équipement audio-vidéo, un enregistreur audio, un enregistreur vidéo, un lecteur audio, un lecteur vidéo, un équipement de home cinéma, une radio, un système de musique de fond, des dispositifs de musique de fond, un élévateur, un rideau, un volet, un store, un verrou, un dispositif de cuisson, un équipement de cuisson, une machine à laver, un lave-vaisselle, un sèche-linge, un dispositif de jardinage, un équipement de jardinage, un système d'arrosage électrique, un chauffe-eau, un réchauffeur de bain, un climatiseur, un dépollueur d'air, un radiateur, un système de chauffage, un refroidisseur, un système de refroidissement, et leurs combinaisons.

6. Procédé de rappel de codes indexés selon l'une quelconque des revendications 1 à 5, dans ledit traitement est sélectionné à partir du groupe comportant une détection de fréquence, une détection de temps de montée, une détection de temps de descente, une détection de durée temporelle, une détection de largeur d'impulsion, une détection de niveau d'impulsion, une détection de largeur d'intervalle, un comptage d'impulsions, un comptage d'intervalles, une définition d'état d'impulsions, une définition d'état d'intervalles, une réinitialisation et leurs combinaisons.

7. Procédé de rappel de codes indexés selon l'une quelconque des revendications 1 à 6, dans lequel lesdites données d'instruction correspondent à une séquence de codes, et dans lequel une activation unique de l'un(e) parmi ledit programme d'automatisation et ladite touche rappelle ladite séquence desdits signaux de commande à distance.

8. Procédé de rappel de codes indexés selon la revendication 7, dans lequel ladite activation unique rappelle une séquence d'un dit signal de commande à distance répété pour ladite fonction spécifique.

9. Procédé de rappel de codes indexés selon l'une quelconque des revendications 4 à 8, dans lequel ledit récepteur RF démodule la fréquence d'un signal RF reçu et ledit récepteur IR démodule la fréquence d'horloge d'un signal IR reçu.

10. Procédé de rappel de codes indexés selon l'une quelconque des revendications 4 à 9, dans lequel la fréquence dudit émetteur RF est commandée par ledit récepteur RF.

11. Procédé de rappel de codes indexés selon l'une quelconque des revendications 1 à 10, dans lequel chaque dit pilote sélectionné à partir du groupe comprenant un contact de relais, un collecteur ouvert et un interrupteur électrique est directement connectable audit appareil ménager spécifique par l'intermédiaire d'un circuit filaire.

12. Procédé de rappel de codes indexés selon l'une quelconque des revendications 1 à 11, dans lequel ledit pilote est sélectionné à partir du groupe comprenant une mémoire tampon de codes sériels, une mémoire tampon de codes parallèles, un émetteur RF, un émetteur IR, une mémoire tampon de données, et leurs combinaisons, pour propager l'un parmi ledit signal de commande à distance et ledit rappel par l'intermédiaire d'au moins l'une parmi une ligne de communication et une station de relais distante.

13. Procédé de rappel de codes indexés selon l'une quelconque des revendications 1 à 12, dans lequel lesdits codes et articles de données sélectionnés à partir du groupe comprenant ledit programme, ladite indexation, lesdits codes indexés de manière unique, ladite affectation, lesdits codes indexés, lesdites données de bâtiment, lesdites données d'instruction, et leurs combinaisons, sont propagés entre ladite station de commande et des dispositifs associés sélectionnés à partir d'un groupe comportant ledit lecteur, ledit dispositif RFID, ladite touche de proximité, lesdites touches, ladite unité de commande à distance IR, ladite unité de commande à distance RF, ledit pilote, ladite station de relais, et leurs combinaisons, incluant un dit nouveau traitement, ledit stockage, ladite indexation, et leurs combinaisons, à travers au moins l'un(e) de ladite entrée et dudit pilote.

14. Procédé de rappel de codes indexés selon l'une quelconque des revendications 1 à 13, dans lequel ledit pilote propage ledit signal de commande à distance vers au moins une station de relais incluant un circuit de conversion sélectionné à partir du groupe comportant un code sériel à destination d'une station de contact de relais, un code sériel à destination d'une station d'interrupteur électrique, un code sériel à destination d'une station d'émetteur RF, un code sériel à destination d'une station d'émetteur IR, un code parallèle à destination d'une station de contact de relais, un code parallèle à destination d'une station d'interrupteur électrique, un code parallèle à destination d'une station d'émetteur RF, un code parallèle à destination d'une station d'émetteur IR, un récepteur RF à destination d'une station de contact de relais, un récepteur RF à destination d'une station d'interrupteur électrique, un récepteur RF à destination d'une station d'émetteur RF, un récepteur RF à destination d'une station d'émetteur IR, un récepteur IR à destination d'une station de contact de relais, un récepteur IR à destination d'une station d'interrupteur électrique, un récepteur IR à destination d'une station d'émetteur IR, un récepteur IR à destination d'une station d'émetteur RF, et leurs combinaisons.

15. Procédé de rappel de codes indexés selon l'une quelconque des revendications 1 à 14, dans lequel lesdits codes et données propagés par l'intermédiaire dudit au moins un pilote sont extensibles par l'intermédiaire d'au moins l'une parmi des stations de relais sans fil et par l'intermédiaire desdites lignes de communication filaire.

16. Procédé de rappel de codes indexés selon l'une quelconque des revendications 1 à 15, dans lequel au moins l'un desdits codes indexés comporte lesdites données de bâtiment connexes à une pluralité d'appareils ménagers dans au moins l'un dudit emplacement et à travers ledit bâtiment, et lesdites données d'instruction comportent au moins un signal de commande à distance pour exploiter une fonction de ladite pluralité d'appareils ménagers, et dans lequel ladite activation de l'un des éléments parmi ledit programme d'automatisation et ladite touche propage un signal de commande à distance reproduit vers ladite pluralité d'appareils ménagers dans ledit au moins un emplacement et à travers ledit bâtiment.

17. Appareil destiné à rappeler des codes indexés stockés dans une mémoire (17S) (253) d'une station de commande (1) (100) (200) par le biais d'un rappel sélectionné à partir d'un groupe comprenant un programme d'automatisation, des touches de commande (234A) (244A) dudit contrôleur, des touches associées (11K) (13K) d'au moins une unité de commande à distance (11) (13) (16), et leurs combinaisons, pour exploiter au moins une fonction spécifique d'au moins un appareil ménager donné d'une pluralité d'appareils ménagers commandés à distance dans un bâtiment, à travers au moins un pilote d'une pluralité de pilotes (19D) (19RF) (19R) (19N) ;
dans lequel ladite station de commande est sélectionnée à partir du groupe comprenant un visiophone (100), une borne d'achat (200), une commande domestique et leurs combinaisons, ledit bâtiment est sélectionné à partir d'un groupe comprenant un bâtiment, une maison, un domicile, un appartement et leurs combinaisons, lesdits codes indexés correspondent à une séquence de codes comprenant des codes dudit bâtiment, des codes dudit au moins un appareil ménager donné, des codes d'un emplacement dudit appareil ménager donné, des codes commandant ledit au moins un pilote et l'une parmi des données d'instruction uniques et une séquence d'instructions pour exploiter l'une parmi ladite fonction spécifique et une séquence de fonctions spécifiques ;
ledit rappel d'un dit code indexé initie la régénération d'un signal de commande à distance indexé, par l'intermédiaire dudit pilote (19R) (19RF) (19D) (19N), à destination dudit au moins un appareil ménager donné, ladite station de commande comprenant en outre au moins une entrée d'une pluralité d'entrées (11A) (12A) (13S) (14R) (15) en vue de recevoir et de filtrer ledit signal de commande à distance afin de délivrer en sortie une enveloppe de chaque signal de commande à distance reçu à une unité centrale de traitement (18) (188) (252) ;
ladite unité centrale de traitement crée des données de bâtiment en incluant lesdits pilotes, lesdits appareils ménagers, chaque dit type d'appareil ménager et son emplacement au sein dudit bâtiment, et lesdites données d'instruction de chaque fonction spécifique de chaque dit appareil ménager donné, en traitant chaque dite enveloppe et en cascadant chacune desdites données d'instruction avec lesdites données de bâtiment ;
ledit programme d'automatisation et au moins une touche desdites touches sont affectés avec ledit rappel d'un code indexé donné en activant l'un(e) parmi ledit programme d'automatisation et ladite touche en vue de propager ladite reproduction dudit signal de commande à distance par l'intermédiaire dudit au moins un pilote vers ledit au moins un appareil ménager donné dans ledit emplacement.

18. Appareil destiné à rappeler des codes indexés selon la revendication 17, dans lequel lesdites touches de commande (234A) (244A) font partie intégrante de ladite station de commande, et lesdites touches associées (16) (11K) (13K) communiquent avec ledit contrôleur par l'intermédiaire d'un support sélectionné à partir du groupe comportant un support RF sans fil, un support IR en ligne de visée, une ligne de communication filaire, un réseau de données, et leurs combinaisons.

19. Appareil destiné à rappeler des codes indexés selon l'une quelconque des revendications 17 à 18, dans lequel lesdites touches sont sélectionnées à partir du groupe comprenant une touche tactile, un bouton-poussoir, une touche de proximité, un dispositif RFID, un lecteur, une icône d'écran tactile, un menu d'écran tactile, et leurs combinaisons.

20. Appareil destiné à rappeler des codes indexés selon l'une quelconque des revendications 17 à 19, dans laquelle ladite entrée est sélectionnée à partir du groupe comprenant un récepteur RF (12R), un récepteur IR (11R), un récepteur filaire (216A), un récepteur de données (15), et leurs combinaisons, et ledit pilote est un circuit sélectionné à partir du groupe comprenant un contact de relais, un collecteur ouvert, un interrupteur électrique, une mémoire tampon de codes sériels, une mémoire tampon de codes parallèles, un émetteur RF, un émetteur IR, et leurs combinaisons.

21. Appareil destiné à rappeler des codes indexés selon l'une quelconque des revendications 17 à 20, dans lequel ledit appareil ménager est sélectionné à partir du groupe comprenant un contrôleur d'alarme, un dispositif d'alarme, un contrôleur d'urgence, un dispositif d'urgence, un luminaire, un téléviseur, un équipement audio-vidéo, un enregistreur audio, un enregistreur vidéo, un lecteur audio, un lecteur vidéo, un équipement de home cinéma, une radio, un système de musique de fond, des dispositifs de musique de fond, un élévateur, un rideau, un volet, un store, un verrou, un dispositif de cuisson, un équipement de cuisson, une machine à laver, un lave-vaisselle, un sèche-linge, un dispositif de jardinage, un équipement de jardinage, un système d'arrosage électrique, un chauffe-eau, un réchauffeur de bain, un climatiseur, un dépollueur d'air, un radiateur, un système de chauffage, un refroidisseur, un système de refroidissement, et leurs combinaisons.

22. Appareil destiné à rappeler des codes indexés selon l'une quelconque des revendications 17 à 21, dans ledit traitement est sélectionné à partir du groupe comportant une détection de fréquence, une détection de temps de montée, une détection de temps de descente, une détection de durée temporelle, une détection de largeur d'impulsion, une détection de niveau d'impulsion, une détection de largeur d'intervalle, un comptage d'impulsions, un comptage d'intervalles, une définition d'état d'impulsions, une définition d'état d'intervalles, une réinitialisation et leurs combinaisons.

23. Appareil destiné à rappeler des codes indexés selon l'une quelconque des revendications 17 à 22, dans lequel lesdites données d'instruction correspondent à une séquence de commandes, et dans lequel une activation unique de l'un(e) parmi ledit programme d'automatisation et ladite touche rappelle ladite séquence desdits signaux de commande à distance.

24. Appareil destiné à rappeler des codes indexés selon la revendication 23, dans lequel ladite activation unique rappelle une séquence d'un dit signal de commande à distance répété pour ladite fonction spécifique.

25. Appareil destiné à rappeler des codes indexés selon l'une quelconque des revendications 20 à 24, dans lequel ledit récepteur RF démodule la fréquence d'un signal RF reçu et ledit récepteur IR démodule la fréquence d'horloge d'un signal IR reçu.

26. Appareil destiné à rappeler des codes indexés selon l'une quelconque des revendications 20 à 25, dans lequel la fréquence dudit émetteur RF est commandée par ledit récepteur RF.

27. Appareil destiné à rappeler des codes indexés selon l'une quelconque des revendications 17 à 26, dans lequel chaque dit pilote sélectionné à partir du groupe comprenant un contact de relais, un collecteur ouvert et un interrupteur électrique est directement connectable audit appareil ménager spécifique par l'intermédiaire d'un circuit filaire.

28. Appareil destiné à rappeler des codes indexés selon l'une quelconque des revendications 17 à 27, dans lequel ledit pilote est sélectionné à partir du groupe comprenant une mémoire tampon de codes sériels, une mémoire tampon de codes parallèles, un émetteur RF, un émetteur IR, une mémoire tampon de données, et leurs combinaisons, pour propager l'un parmi ledit signal de commande à distance et ledit rappel par l'intermédiaire d'au moins l'une parmi une ligne de communication et une station de relais distante.

29. Appareil destiné à rappeler des codes indexés selon l'une quelconque des revendications 17 à 28, dans lequel lesdits codes et articles de données sélectionnés à partir du groupe comprenant ledit programme, ladite indexation, ledit agencement en cascade de manière unique, ladite affectation, lesdits codes indexés, lesdites données de bâtiment, lesdites données d'instruction, et leurs combinaisons, sont propagés entre ladite station de commande et des dispositifs associés sélectionnés à partir d'un groupe comportant ledit lecteur, ledit dispositif RFID, ladite touche de proximité, lesdites touches, ladite unité de commande à distance IR, ladite unité de commande à distance RF, ledit pilote, ladite station de relais, et leurs combinaisons, incluant un dit nouveau traitement, ledit stockage, ladite indexation, et leurs combinaisons, à travers au moins l'un(e) de ladite entrée et dudit pilote.

30. Appareil destiné à rappeler des codes indexés selon l'une quelconque des revendications 17 à 29, dans lequel ledit pilote propage ledit signal de commande à distance vers au moins une station de relais incluant un circuit de conversion sélectionné à partir du groupe comportant un code sériel à destination d'une station de contact de relais, un code sériel à destination d'une station d'interrupteur électrique, un code sériel à destination d'une station d'émetteur RF, un code sériel à destination d'une station d'émetteur IR, un code parallèle à destination d'une station de contact de relais, un code parallèle à destination d'une station d'interrupteur électrique, un code parallèle à destination d'une station d'émetteur RF, un code parallèle à destination d'une station d'émetteur IR, un récepteur RF à destination d'une station de contact de relais, un récepteur RF à destination d'une station d'interrupteur électrique, un récepteur RF à destination d'une station d'émetteur RF, un récepteur RF à destination d'une station d'émetteur IR, un récepteur IR à destination d'une station de contact de relais, un récepteur IR à destination d'une station d'interrupteur électrique, un récepteur IR à destination d'une station d'émetteur IR, un récepteur IR à destination d'une station d'émetteur RF, et leurs combinaisons.

31. Appareil destiné à rappeler des codes indexés selon l'une quelconque des revendications 17 à 30, dans lequel lesdits codes et lesdites données, propagés par l'intermédiaire dudit au moins un pilote, sont extensibles par l'intermédiaire d'au moins l'une parmi une station de relais sans fil et lesdites lignes de communication filaire.

32. Appareil destiné à rappeler des codes indexés selon l'une quelconque des revendications 17 à 31, dans lequel au moins l'un desdits codes indexés comporte lesdites données de bâtiment connexes à une pluralité d'appareils ménagers dans au moins l'un dudit emplacement et à travers ledit bâtiment, et lesdites données d'instruction comportent au moins un signal de commande à distance pour exploiter une fonction de ladite pluralité d'appareils ménagers, et dans lequel ladite activation de l'un des éléments parmi ledit programme d'automatisation et ladite touche propage un signal de commande à distance reproduit vers ladite pluralité d'appareils ménagers dans ledit au moins un emplacement et à travers ledit bâtiment.
